(19) Europäisches Patentamt / European Patent Office / Office européen des brevets

(11) **EP 4 446 352 A1**

(12) **EUROPEAN PATENT APPLICATION**
published in accordance with Art. 153(4) EPC

(43) Date of publication:
**16.10.2024  Bulletin 2024/42**

(21) Application number: **22904245.2**

(22) Date of filing: **07.12.2022**

(51) International Patent Classification (IPC):
*C08F 290/14* (2006.01)      *C09D 5/16* (2006.01)
*C09D 183/10* (2006.01)      *C09D 7/65* (2018.01)

(52) Cooperative Patent Classification (CPC):
**C08F 290/14; C09D 5/16; C09D 7/65; C09D 183/10**

(86) International application number:
**PCT/JP2022/045036**

(87) International publication number:
**WO 2023/106317 (15.06.2023 Gazette 2023/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.12.2021   JP 2021198736**

(71) Applicant: **Kaneka Corporation
Osaka-shi, Osaka 530-8288 (JP)**

(72) Inventor: **MAIZURU, Nobuyoshi
Takasago-shi, Hyogo 676-8688 (JP)**

(74) Representative: **Vossius & Partner
Patentanwälte Rechtsanwälte mbB
Siebertstrasse 3
81675 München (DE)**

(54)   **WATER-BASED COATING**

(57)   It is an object to provide a water-based coating that makes it possible to provide a highly water-repellent coating film and that has excellent film formability. Provided is a water-based coating containing (a) a graft copolymer (A) containing a specific amount of a non-crosslinked polyorganosiloxane and a graft part and (b) a polymer (B) having a specific feature, (i) an amount of the polymer (B) being a specific amount, or (ii) a complex of the graft copolymer (A) and the polymer (B) having a weight-average molecular weight that is not more than a specific value.

**EP 4 446 352 A1**

**Description**

Technical Field

The present invention relates to a water-based coating.

Background Art

Various antifouling coatings have been developed. For example, Patent Literature 1 discloses an antifouling coating composition containing: a hydrolyzable resin that contains a silicon-containing group and a metal atom-containing group containing a divalent metal atom M; a thermoplastic resin; and/or a plasticizing agent.

Furthermore, a solvent-based coating, which is the mainstream of coatings, has recently been rapidly transitioning to a water-based coating from the viewpoints of environmental conservation and safety and health. Examples of the water-based coating include techniques disclosed in Patent Literatures 2 to 5.

For example, Patent Literature 2 discloses an aqueous coating composition containing an aqueous dispersion of a polymer (A) obtained by (i) copolymerizing (a) 1% by mass to 50% by mass of a polyorganosiloxane polymer (III) obtained by co-condensing an organosiloxane (I) and a graft crossing agent (II) and (b) 19% by mass to 69% by mass of an ethylenically unsaturated monomer (IV) and then (ii) further copolymerizing 30% by mass to 80% by mass of an ethylenically unsaturated monomer (V) (provided that (III) + (IV) + (V) = 100% by mass). In the technique disclosed in Patent Literature 2, a glass transition temperature in a case where the ethylenically unsaturated monomer (IV) is copolymerized is in a range of - 60°C to 20°C, and a glass transition temperature in a case where the ethylenically unsaturated monomer (V) is copolymerized is in a range of 30°C to 100°C.

Further, known examples of a method for producing a graft copolymer with use of a non-crosslinked polyorganosiloxane latex include a technique disclosed in Patent Literature 6.

Citation List

[Patent Literature]

[Patent Literature 1]
PCT International Publication No. WO 2011/046086
[Patent Literature 2]
Japanese Patent Application Publication Tokukai No. 2004-137374
[Patent Literature 3]
Japanese Patent Application Publication Tokukaihei No. 9-137123
[Patent Literature 4]
Japanese Patent Application Publication Tokukaihei No. 9-208642
[Patent Literature 5]
Japanese Patent Application Publication Tokukaihei No. 07-286129
[Patent Literature 6]
Japanese Patent Application Publication Tokukaihei No. 07-033836

Summary of Invention

Technical Problem

However, in terms of water repellency of a coating film, such a conventional technique as described above is not sufficient and has room for further improvement. Furthermore, a coating preferably has excellent film formability.

An embodiment of the present invention has been made in view of the above problems, and an object thereof is to provide a novel water-based coating that makes it possible to provide a highly water-repellent coating film and that has excellent film formability.-

Solution to Problem

As a result of diligent research in order to attain the object, the inventors of the present invention arrived at the present invention.

A water-based coating in accordance with an embodiment of the present invention contains a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and the polymer (B) being contained in an amount of not less than 5.0% by weight in 100% by weight of the total of the graft copolymer (A) and the polymer (B).

A water-based coating in accordance with a further embodiment of the present invention contains a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and a complex of the graft copolymer (A) and the polymer (B) having a weight-average molecular weight of not more than 150,000.

A method for producing a water-based coating in accordance with a further embodiment of the present invention includes: a step 1 of obtaining a polyorganosiloxane by polymerizing a monomer mixture for polyorganosiloxane formation, the monomer mixture containing (a) an organosiloxane and (b) a monomer M containing (b-1) at least one hydrolyzable silyl group in a molecule and (b-2) at least one ethylenically unsaturated group and/or at least one mercapto group; and a step 2 of polymerizing, in the presence of the polyorganosiloxane obtained in the step 1, a monomer mixture for graft part formation, wherein the monomer mixture for polyorganosiloxane formation is contained in an amount of 55% by weight to 90% by weight in 100% by weight of a total of the monomer mixture for polyorganosiloxane formation and the monomer mixture for graft part formation, in the step 1, a polyfunctional alkoxysilane compound and a polyfunctional monomer are used in a total amount of not more than 0.50% by weight in 100% by weight of the monomer mixture for polyorganosiloxane formation, in the step 2, the monomer mixture for graft part formation contains at least one type of monomer selected from the group consisting of an aromatic vinyl monomer, a vinyl cyanide monomer, and a (meth)acrylate monomer, and in the step 2, a chain transfer agent is used in an amount of 0.01 parts by weight to 5.00 parts by weight with respect to 100 parts by weight of the monomer mixture for graft part formation.

Advantageous Effects of Invention

An embodiment of the present invention brings about an effect of making it possible to provide a water-based coating that makes it possible to provide a highly water-repellent coating film and that has excellent film formability.

Description of Embodiments

The following description will discuss an embodiment of the present invention. The present invention is not, however, limited to this embodiment. The present invention is not limited to the configurations described below, but may be altered in various ways within the scope of the claims. Any embodiment or example derived from a proper combination of technical means disclosed in different embodiments or examples is also encompassed in the technical scope of the present invention. Further, it is possible to form a new technical feature by combining the technical means disclosed in the respective embodiments. All academic and patent documents cited in the present specification are incorporated herein by reference. Any numerical range expressed as "A to B" herein means "not less than A and not more than B (i.e., a range from A to B which includes both A and B)" unless otherwise stated.

In the present specification, a repeating unit derived from an X monomer may be referred to as an "X unit". The repeating unit can be said to be a structural unit.

[1. Technical idea of an embodiment of the present invention]

As described earlier, generally, an antifouling coating is applied to an underwater structure. Known examples of a coating include a solvent-based coating and a water-based coating, and transition to a water-based coating is rapidly advancing from the viewpoints of environmental conservation and safety and health. However, only a solvent-based coating is known as far as an antifouling coating is concerned (for example, Patent Literature 1). Thus, a water-based antifouling coating is required to be developed.

Known examples of a water-based coating include the above-described techniques disclosed in Patent Literatures 2 to 5. However, the techniques disclosed in all those Patent Literatures still have room for further improvement in terms of water repellency that an antifouling coating is required to have.

In view of this, the inventors of the present invention conducted diligent research in order to provide a water-based coating that makes it possible to provide a highly water-repellent coating film. As a result, the inventors of the present invention uniquely found that a water-based coating which makes it possible to provide a highly water-repellent coating film surprisingly can be provided by employing the following feature: providing a water-based coating containing a graft copolymer containing at least a certain amount of a polyorganosiloxane.

However, such a water-based coating is inferior in film formability. The inventors of the present invention inferred that the water-based coating is inferior in film formability because at least a certain amount of a polyorganosiloxane is contained. That is, it was inferred that water repellency and film formability are in a trade-off relationship.

In view of this, the inventors of the present invention conducted further diligent research in order to provide a water-based coating that makes it possible to achieve both water repellency and film formability, that is, a water-based coating that makes it possible to provide a highly water-repellent coating film and that has excellent film formability. As a result, the inventors of the present invention arrived at the present invention by uniquely finding that a water-based coating which makes it possible to provide a highly water-repellent coating film and which has excellent film formability surprisingly can be provided by employing the following feature: providing a water-based coating containing a graft copolymer (A) containing at least a certain amount of a polyorganosiloxane, and (i) containing a polymer (B) having a specific feature with a complex of the graft copolymer (A) and the polymer (B) having a molecular weight that is not more than a certain amount, or (ii) containing a certain amount of the polymer (B) having a specific feature.

[2. Water-based coating]

A water-based coating in accordance with an embodiment of the present invention contains a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and the polymer (B) being contained in an amount of not less than 5.0% by weight in 100% by weight of the total of the graft copolymer (A) and the polymer (B). Such a water-based coating may also be referred to as a "first water-based coating" in the present specification.

The first water-based coating, which has the above-described feature, has an advantage of having excellent film formability and making it possible to provide a highly water-repellent coating film. Further, the first water-based coating, which has the above-described feature, has an antifouling property against underwater life. Thus, the first water-based coating can be suitably used as an antifouling coating for an underwater structure.

In other words, a further embodiment of the present invention is a water-based antifouling coating for an underwater structure, the water-based antifouling coating containing a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and the polymer (B) being contained in an amount of not less than 5.0% by weight in 100% by weight of the total of the graft copolymer (A) and the polymer (B).

A water-based coating in accordance with a further embodiment of the present invention contains a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and a complex of the graft copolymer (A) and the polymer (B) having a weight-average molecular weight of not more than 150,000. Such a water-based coating may also be referred to as a "second water-based coating" in the present specification.

The second water-based coating, which has the above-described feature, has an advantage of having excellent film formability and making it possible to provide a highly water-repellent coating film. Further, the second water-based coating, which has the above-described feature, has an antifouling property against underwater life. Thus, the second water-based coating can be suitably used as an antifouling coating for an underwater structure.

In other words, a further embodiment of the present invention is a water-based antifouling coating for an underwater structure, the water-based antifouling coating containing a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and a complex of the graft copolymer (A) and the polymer (B) having a weight-average molecular weight of not more than 150,000.

In the present specification, in a case where the first water-based coating and the second water-based coating, which have been described earlier, are not particularly distinguished from each other, the first water-based coating and the second water-based coating are collectively referred to as "a water-based coating in accordance with an embodiment of the present invention" or "the present water-based coating".

A method for evaluating film formability of a water-based coating in accordance with an embodiment of the present invention and a method for measuring water repellency of a coating film of a water-based coating in accordance with an embodiment of the present invention will be discussed in detail in Examples described later.

(2-1. Graft copolymer (A))

The present water-based coating contains a graft copolymer (A) and a polymer (B). The graft copolymer (A) contains a polyorganosiloxane and a graft part grafted to the polyorganosiloxane.

(2-1-1. Polyorganosiloxane)

The polyorganosiloxane contains (i) an organosiloxane-based unit and (ii) a structural unit U derived from a monomer containing (ii-a) at least one hydrolyzable silyl group in a molecule and (ii-b) at least one ethylenically unsaturated group and/or at least one mercapto group.

The graft copolymer (A) that contains the polyorganosiloxane enables the water-based coating to provide a highly water-repellent coating film. Water repellency of a coating film can be correlated with a contact angle of the coating film. In other words, the graft copolymer (A) that contains the polyorganosiloxane enables the water-based coating to provide a coating film having a large contact angle. Furthermore, the graft copolymer (A) that contains the polyorganosiloxane allows a coating film provided by the water-based coating to have an advantage of having sufficient heat resistance and excellent impact resistance at a low temperature.

(Organosiloxane-based unit)

The organosiloxane-based unit is exemplified by, but not particularly limited to, (a) alkyl or aryl disubstituted silyloxy units such as a dimethylsilyloxy unit, a diethylsilyloxy unit, a methylphenylsilyloxy unit, a diphenylsilyloxy unit, and a dimethylsilyloxy-diphenylsilyloxy unit, and (b) alkyl or aryl monosubstituted silyloxy units such as an organohydrogensilyloxy unit in which some of sidechain alkyls have been substituted with hydrogen atoms. The polyorganosiloxane may contain only one of the above-listed organosiloxane-based units or may contain two or more of the above-listed organosiloxane-based units in combination.

The polyorganosiloxane contains the organosiloxane-based unit in an amount of preferably not less than 50 mol%, more preferably not less than 60 mol%, more preferably not less than 70 mol%, even more preferably not less than 80 mol%, still more preferably not less than 90 mol%, and particularly preferably not less than 95 mol%, in 100 mol% of all structural units contained in the polyorganosiloxane. This is because a resulting water-based coating makes it possible to provide a coating film that has excellent heat resistance.

The polyorganosiloxane contains at least one structural unit selected from the group consisting of a dimethylsilyloxy unit, a methylphenylsilyloxy unit, and a dimethylsilyloxy-diphenylsilyloxy unit in an amount of preferably not less than 50 mol%, more preferably not less than 60 mol%, more preferably not less than 70 mol%, even more preferably not less than 80 mol%, still more preferably not less than 90 mol%, and particularly preferably not less than 95 mol%, in 100 mol% of all the structural units contained in the polyorganosiloxane. This is because a resulting water-based coating makes it possible to provide a coating film that has more excellent heat resistance. A material of the dimethylsilyloxy unit is more easily available and more inexpensive as compared with any other organosiloxane-based monomer. Thus, in terms of availability and from an economic viewpoint, the polyorganosiloxane contains the dimethylsilyloxy unit in an amount of more preferably not less than 50 mol%, more preferably not less than 60 mol%, more preferably not less than 70 mol%, even more preferably not less than 80 mol%, still more preferably not less than 90 mol%, and particularly preferably not less than 95 mol%, in 100 mol% of all the structural units contained in the polyorganosiloxane.

(Structural unit U)

In a case where a monomer (monomer M described later) containing (a) at least one hydrolyzable silyl group in a molecule and (b) at least one ethylenically unsaturated group and/or at least one mercapto group is used as a material to prepare the polyorganosiloxane, it is possible to obtain the polyorganosiloxane that contains the structural unit U.

The hydrolyzable silyl group contained in the monomer M used in an embodiment of the present invention is not particularly limited. Examples of the hydrolyzable silyl group include a halogenosilyl group, an acyloxysilyl group, an amidosilyl group, an aminosilyl group, an alkenyloxysilyl group, an aminoxysilyl group, an oximesilyl group, an alkoxysilyl group, a thioalkoxysilyl group, and a silanol group. The hydrolyzable silyl group is preferably an alkoxysilyl group because the alkoxysilyl group has high polymerization reactivity and is easy to handle. In a case where the monomer M contains two or more hydrolyzable silyl groups in a molecule, the two or more hydrolyzable silyl groups may be identical to or different from each other.

The ethylenically unsaturated group contained in the monomer M used in an embodiment of the present invention is not particularly limited. Examples of the ethylenically unsaturated group include a vinyl group, an acryloyl group, and a methacryloyl group. In terms of reactivity during graft part formation, the ethylenically unsaturated group is preferably at least one selected from the group consisting of an acryloyl group and a methacryloyl group. In a case where the monomer M contains two or more ethylenically unsaturated groups in a molecule, the two or more ethylenically unsaturated groups may be identical to or different from each other. The expression "during graft part formation" can be said to be "during polymerization of a monomer mixture for graft part formation".

Specific examples of the monomer M include (a) vinylsilanes such as vinylmethyldimethoxysilane, vinyltrimethoxysilane, vinyltriethoxysilane, and tetramethyltetravinylcyclotetrasiloxane, (b) (meth)acryloyloxyalkylsilanes such as β-methacryloyloxyethyldimethoxymethylsilane, 3-(meth)acryloyloxypropyltrimethoxysilane, 3-(meth)acryloyloxypropyldimethoxymethylsilane, 3-(meth)acryloyloxypropylmethoxydimethylsilane, 3-(meth)acryloyloxypropyltriethoxysilane, 3-(meth)acryloyloxypropyldiethoxymethylsilane, 3-(meth) acryloyloxypropyldiethoxyethylsilane, 3-(meth) acryloyloxypropylethoxydimethylsilane, 3-(meth)acryloyloxypropylethoxydiethylsilane, and δ-(meth)acryloyloxybutyldiethoxymethylsilane, and (c) mercaptoalkylsilanes such as 3-mercaptopropyltrimethoxysilane, 3-mercaptopropyldimethoxymethylsilane, 3-mercaptopropylmethoxydimethylsilane, 3-mercaptopropyltriethoxysilane, 3-mercaptopropyldiethoxymethylsilane, and 3-mercaptopropyldiethoxyethylsilane. Further specific examples of the monomer M include p-vinylphenylmethyldimethoxysilane, 2-(m-vinylphenyl)ethylmethyldimethoxysilane, 1-(m-vinylphenyl)methyldimethylisopropoxysilane, 2-(p-vinylphenyl)ethylmethyldimethoxysilane, 3-(p-vinylphenoxy)propylmethyldiethoxysilane, 3-(p-vinylbenzoyloxy)propylmethyldimethoxysilane, 1-(o-vinylphenyl)-1,1,2-trimethyl-2,2-dimethoxydisilane, 1-(p-vinylphenyl)-1,1-diphenyl-3-ethyl-3,3-diethoxydisiloxane, m-vinylphenyl-[3-(triethoxysilyl)propyl]diphenylsilane, and [3-(p-isopropenylbenzoylamino)propyl]phenyldipropoxysilane. These monomers M may be used alone or in combination of two or more.

The monomer M is preferably at least one selected from the group consisting of (meth)acryloyloxyalkylsilanes such as β-methacryloyloxyethyldimethoxymethylsilane, 3-(meth)acryloyloxypropyltrimethoxysilane, 3-(meth)acryloyloxypropyldimethoxymethylsilane, 3-(meth)acryloyloxypropylmethoxydimethylsilane, 3-(meth)acryloyloxypropyltriethoxysilane, 3-(meth)acryloyloxypropyldiethoxymethylsilane, 3-(meth)acryloyloxypropyldiethoxyethylsilane, 3-(meth)acryloyloxypropylethoxydimethylsilane, 3-(meth)acryloyloxypropylethoxydiethylsilane, and δ-(meth)acryloyloxybutyldiethoxymethylsilane, and more preferably at least one selected from the group consisting of 3-(meth)acryloyloxypropyltrimethoxysilane and 3-(meth)acryloyloxypropyldimethoxymethylsilane. The above feature is advantageous in that it is possible to efficiently polymerize the monomer mixture for graft part formation in the presence of the polyorganosiloxane. This provides an advantage of making it possible to obtain the graft copolymer (A) that has a high graft rate.

The polyorganosiloxane contains the structural unit U in an amount of preferably 0.001% by weight to 10.0%, more preferably 0.001% by weight to 5.0% by weight, even more preferably 0.01% by weight to 5.0% by weight, still more preferably 1.0% by weight to 5.0% by weight, and particularly preferably 1.0% by weight to 3.0% by weight, in 100% by weight of the polyorganosiloxane. The above feature is advantageous in that it is possible to efficiently polymerize the monomer mixture for graft part formation in the presence of the polyorganosiloxane. This provides an advantage of making it possible to obtain the graft copolymer (A) that has a high graft rate.

(Crosslinked structure of polyorganosiloxane)

A crosslinked structure can be introduced into the polyorganosiloxane by using a polyfunctional alkoxysilane compound and/or a polyfunctional monomer to prepare the polyorganosiloxane. Thus, the polyfunctional alkoxysilane compound and the polyfunctional monomer each can be said to be a crosslinking agent in the polyorganosiloxane. In an embodiment of the present invention, the polyorganosiloxane is non-crosslinked. Note here that "the polyorganosiloxane is non-crosslinked" means that a total amount of the polyfunctional alkoxysilane compound and the polyfunctional monomer which are used to prepare the polyorganosiloxane is not more than 0.50% by weight in 100% by weight of the monomer mixture for polyorganosiloxane formation. In other words, in an embodiment of the present invention, the polyorganosiloxane is substantially non-crosslinked. The total amount of the polyfunctional alkoxysilane compound and the polyfunctional monomer which are used to prepare the polyorganosiloxane is preferably not more than 0.50% by weight, more preferably not more than 0.20% by weight, even more preferably not more than 0.10% by weight, and particularly preferably not more than 0.01% by weight, in 100% by weight of the monomer mixture for polyorganosiloxane formation.

Examples of the polyfunctional alkoxysilane compound include tetramethoxysilane, tetraethoxysilane (TEOS), tetraisopropoxysilane, tetrabutoxysilane, tetraoctylsilane, methyltrimethoxysilane, methyltriethoxysilane, ethyltriethoxysilane, methyltriisopropoxysilane, vinyltrimethoxysilane, phenyltrimethoxysilane, and dimethyldimethoxysilane.

The polyfunctional monomer can be said to be a monomer having two or more radical-polymerizable reactive groups in a single molecule. The radical-polymerizable reactive groups are each, for example, a carbon-carbon double bond. Examples of the polyfunctional monomer exclude butadiene and include (meth)acrylates having an ethylenically unsaturated double bond(s), such as allyl alkyl (meth)acrylates and allyl oxyalkyl (meth)acrylates. Examples of a monomer having two (meth)acrylic groups include ethylene glycol di(meth)acrylate, butylene glycol di(meth)acrylate, butanediol di(meth)acrylate, hexanediol di(meth)acrylate, cyclohexane dimethanol di(meth)acrylate, and polyethylene glycol di(meth)acrylates. Examples of the polyethylene glycol di(meth)acrylates include triethylene glycol di(meth)acrylate, tripropylene glycol di(meth)acrylate, tetraethylene glycol di(meth)acrylate, and polyethylene glycol (600) di(meth)acrylate. Examples of a monomer having three (meth)acrylic groups include alkoxylated trimethylolpropane tri(meth)acrylates, glycerol propoxy tri(meth)acrylate, pentaerythritol tri(meth)acrylate, and tris(2-hydroxyethyl)isocyanurate tri(meth)acrylate. Examples of the alkoxylated trimethylolpropane tri(meth)acrylates include trimethylolpropane tri(meth)acrylate and trimethylolpropane triethoxy tri(meth)acrylate. Examples of a monomer having four (meth)acrylic groups include pentaerythritol tetra(meth)acrylate and ditrimethylolpropane tetra(meth)acrylate. Examples of a monomer having five (meth)acrylic groups include dipentaerythritol penta(meth)acrylate. Examples of a monomer having six (meth)acrylic groups include ditrimethylolpropane hexa(meth)acrylate. Examples of the polyfunctional monomer also include diallyl phthalate, triallyl cyanurate, triallyl isocyanurate, and divinylbenzene.

(Volume-average particle size of polyorganosiloxane)

The polyorganosiloxane has a volume-average particle size of preferably 0.03 μm to 50.00 μm, more preferably 0.05 μm to 10.00 um, more preferably 0.08 μm to 2.00 μm, even more preferably 0.10 μm to 1.00 um, still more preferably 0.10 μm to 0.80 μm, and particularly preferably 0.10 μm to 0.50 μm. (a) The polyorganosiloxane that has a volume-average particle size of not less than 0.03 um is advantageous in that the polyorganosiloxane which has a desired volume-average particle size can be stably obtained. (b) The polyorganosiloxane that has a volume-average particle size of not more than 50.00 μm is advantageous in that a resulting water-based coating has excellent film formability. The volume-average particle size of the polyorganosiloxane can be measured by using, as a test specimen, an aqueous latex containing the polyorganosiloxane, and with use of, for example, a dynamic light scattering type particle size distribution measurement apparatus. A method for measuring the volume-average particle size of the polyorganosiloxane will be discussed in detail in Examples described later.

(2-1-2. Core part)

The graft copolymer (A) contains a polyorganosiloxane and a graft part grafted to the polyorganosiloxane. In the graft copolymer (A), the graft part can cover at least a part of the polyorganosiloxane or an entirety of the polyorganosiloxane. At least a part of the graft part is preferably present on an outermost side of the graft copolymer (A). Thus, the polyorganosiloxane can be said to be a core part of the graft copolymer (A). In other words, the graft copolymer (A) contains a core part containing the polyorganosiloxane and a graft part grafted to the core part.

The core part may be composed only of one type of a polyorganosiloxane that has the identical structural unit composition (type and content), or may be composed of two or more types of polyorganosiloxanes that differ in structural unit composition (type and content). Further, the core part may contain other one or more rubbers in addition to one or more types of polyorganosiloxanes.

Examples of the other rubber(s) include (a) natural rubber, (b) diene-based rubber containing a structural unit derived from a diene-based monomer in an amount of not less than 50% by weight in 100% by weight of structural units of the rubber, and (c) (meth)acrylate-based rubber containing a structural unit derived from a (meth)acrylate-based monomer in an amount of not less than 50% by weight in 100% by weight of the structural units of the rubber. In the present specification, (meth)acrylate means acrylate and/or methacrylate.

The core part contains the polyorganosiloxane in an amount of preferably 55 parts by weight to 100 parts by weight, more preferably 60 parts by weight to 100 parts by weight, more preferably 65 parts by weight to 100 parts by weight, more preferably 70 parts by weight to 100 parts by weight, more preferably 75 parts by weight to 100 parts by weight, more preferably 80 parts by weight to 100 parts by weight, more preferably 85 parts by weight to 100 parts by weight, even more preferably containing 90 parts by weight to 100 parts by weight, and particularly preferably containing 95 parts by weight to 100 parts by weight, in 100 parts by weight of the core part. According to the above feature, the water-based coating has an advantage of making it possible to provide a more highly water-repellent coating film. The core part may contain 100 parts by weight of the polyorganosiloxane in 100 parts by weight of the core part, i.e., the core part may be composed only of the polyorganosiloxane.

(Volume-average particle size of core part)

The core part has a volume-average particle size of preferably 0.03 $\mu$m to 50.00 $\mu$m, more preferably 0.05 um to 10.00 $\mu$m, more preferably 0.08 $\mu$m to 2.00 um, even more preferably 0.10 $\mu$m to 1.00 $\mu$m, still more preferably 0.10 $\mu$m to 0.80 um, and particularly preferably 0.10 $\mu$m to 0.50 $\mu$m. (a) The core part that has a volume-average particle size of not less than 0.03 $\mu$m is advantageous in that the core part which has a desired volume-average particle size can be stably obtained. (b) The core part that has a volume-average particle size of not more than 50.00 $\mu$m is advantageous in that a resulting water-based coating has excellent film formability. By a method similar to the method by which the volume-average particle size of the polyorganosiloxane is measured, the volume-average particle size of the core part can be measured by using, as a test specimen, an aqueous latex containing the core part, and with use of, for example, a dynamic light scattering type particle size distribution measurement apparatus.

(2-1-3. Graft part)

The graft part is not particularly limited but preferably contains, for example, a structural unit derived from at least one type of monomer selected from the group consisting of an aromatic vinyl monomer, a vinyl cyanide monomer, and a (meth)acrylate monomer. With the above feature, the graft part can function to solidify a substantially non-crosslinked polyorganosiloxane. The above feature is advantageous in that a resulting water-based coating has excellent film formability and a coating film of the water-based coating has an excellent strength.

Specific examples of the aromatic vinyl monomer include styrene, $\alpha$-methylstyrene, p-methylstyrene, and divinylbenzene.

Specific examples of the vinyl cyanide monomer include acrylonitrile and methacrylonitrile.

Specific examples of the (meth)acrylate monomer include: (a) alkyl (meth)acrylates such as methyl (meth)acrylate, ethyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate; (b) aromatic ring-containing (meth)acrylates such as phenoxyethyl (meth)acrylate and benzyl (meth)acrylate; (c) hydroxyalkyl (meth)acrylates such as 2-hydroxyethyl (meth)acrylate and 4-hydroxybutyl (meth)acrylate; (d) glycidyl (meth)acrylates such as glycidyl (meth)acrylate and glycidyl alkyl (meth)acrylate; (e) alkoxy alkyl (meth)acrylates; (f) allyl alkyl (meth)acrylates such as allyl (meth)acrylate and allyl alkyl (meth)acrylate; and (g) polyfunctional (meth)acrylates such as monoethylene glycol di(meth)acrylate, triethylene glycol di(meth)acrylate, and tetraethylene glycol di(meth)acrylate.

From the viewpoint that a resulting water-based coating has excellent film formability by making it possible, with use of any of the (meth)acrylate monomers listed below, to design a glass transition temperature of the graft part so that the glass transition temperature is set low (e.g., at a temperature of not higher than 80°C), the (meth)acrylate monomer is preferably at least one selected from the group consisting of methyl acrylate, ethyl (meth)acrylate, and butyl (meth)acrylate, more preferably at least one selected from the group consisting of methyl acrylate, butyl methacrylate, and butyl acrylate, even more preferably at least one selected from the group consisting of butyl methacrylate and butyl acrylate, and particularly preferably butyl methacrylate. In terms of reactivity during graft part formation, the (meth)acrylate monomer is preferably methyl methacrylate. A glass transition temperature of a resulting graft part can be adjusted to a desired temperature by forming a monomer mixture for graft part formation by mixing (i) at least one selected from the group consisting of methyl acrylate, ethyl (meth)acrylate, and butyl (meth)acrylate each having a relatively low homopolymer glass transition temperature and (ii) methyl methacrylate having a relatively high homopolymer glass transition temperature.

The above-listed at least one type of monomer selected from the group consisting of an aromatic vinyl monomer, a vinyl cyanide monomer, and a (meth)acrylate monomer may be used alone or in combination of two or more.

The graft part contains structural unit(s) derived from aromatic vinyl monomer(s), structural unit(s) derived from vinyl cyanide monomer(s), and structural unit(s) derived from (meth)acrylate monomer(s) in an amount of preferably 10% by weight to 95% by weight in total, more preferably 30% by weight to 92% by weight in total, even more preferably 50% by weight to 90% by weight in total, particularly preferably 60% by weight to 87% by weight in total, and most preferably 70% by weight to 85% by weight in total, in 100% by weight of all structural units of the graft part.

The graft part contains a structural unit derived from methyl methacrylate and a structural unit derived from butyl methacrylate in order to achieve both film formability of the water-based coating and reactivity during graft part formation.

The graft part contains structural unit(s) derived from (meth)acrylate monomer(s) in an amount of preferably 10% by weight to 100% by weight, more preferably 30 weight% to 100 weight%, even more preferably 50 weight% to 100 weight%, still more preferably more than 50% by weight and not more than 100% by weight, particularly preferably 70 weight% to 100 weight%, and most preferably 90 weight% to 100 weight%, in 100% by weight of all the structural units of the graft part. The above feature is advantageous (i) in that a resulting water-based coating has more excellent film formability by the graft part having a lower glass transition temperature (e.g., a temperature lower than 80°C) and/or (ii) in that reactivity is excellent during graft part formation. The graft part may contain structural unit(s) derived from (meth)acrylate monomer(s) in an amount of 100% by weight in 100% by weight of all the structural units of the graft part. That is, the graft part may be composed only of the structural unit(s) derived from (meth)acrylate monomer(s).

(Structural unit derived from reactive emulsifier)

The graft part preferably further contains a structural unit derived from a reactive emulsifier. The above feature is advantageous in that a scale is less or not produced during production of the water-based coating. In the present specification, "scale" means an agglutinate that is among an agglutinate of the graft copolymer (A) and/or an agglutinate of the graft copolymer (A) and the polymer (B) which is/are produced during production of the water-based coating (e.g., during production of the graft copolymer (A) or during production of the graft copolymer (A) and the polymer (B)) and that has a certain size or more (e.g., an agglutinate that cannot pass through a 150-mesh metal gauze). A method for quantifying the scale will be discussed in detail in Examples described later.

In the present specification, a "reactive emulsifier" means an emulsifier having an ethylenically unsaturated double bond. "Reactivity" of the reactive emulsifier means performance capable of having a polymerizable radical, for example, in the presence of a polymerization initiator. Thus, the "reactive emulsifier" can be said to be a "polymerizable emulsifier". The "reactive emulsifier" may also be referred to as a "reactive surfactant".

The reactive emulsifier is not particularly limited in type, provided that the reactive emulsifier has an ethylenically unsaturated double bond. The reactive emulsifier may be a nonionic reactive emulsifier, an anionic reactive emulsifier, or a nonion-type reactive emulsifier. The reactive emulsifier is preferably, for example, an anionic reactive emulsifier because the anionic reactive emulsifier makes it easy to control a particle size of the graft copolymer (A) to a fine particle size (specifically, the anionic reactive emulsifier makes it easy to control the volume-average particle size of the graft copolymer (A) to 30 nm to 200 nm).

The ethylenically unsaturated double bond of the reactive emulsifier is derived from a group having an ethylenically unsaturated double bond. In other words, the reactive emulsifier has a group having an ethylenically unsaturated double bond. Specific examples of the group having an ethylenically unsaturated double bond include an oxyalkylene group, a (meth)acryloyl group, a vinyl group, an allyl group, an isopropenyl group, a 1-propenyl group, an allyloxy group, and a styryl group.

The reactive emulsifier preferably has an oxyalkylene group. The reactive emulsifier that has an oxyalkylene group has excellent copolymerizability with a monomer. Examples of the oxyalkylene group include oxyalkylene groups having alkylene groups having 2 to 4 carbon atoms, such as an oxyethylene group, an oxypropylene group, and an oxybutylene group. Among these, an oxyethylene group is preferable as the oxyalkylene group. An oxyethylene group is, for example, more hydrophilic than an oxypropylene group and an oxybutylene group. Thus, in a case where the graft part of the graft copolymer (A) contains a structural unit derived from the reactive emulsifier having an oxyethylene group, a dense hydration layer can be formed on surfaces of particles of the graft copolymer (A). As a result, the particles of the graft copolymer (A) tend to be more dispersible in an aqueous medium.

An average addition mole number of the oxyethylene group in 1 mol of the reactive emulsifier is not particularly limited, and is, for example, preferably not less than 5 mol and not more than 40 mol, and more preferably not less than 10 mol and not more than 30 mol. According to the above feature, copolymerizability with a monomer tends to be excellent. Furthermore, in a case where the average addition mole number of the oxyethylene group is not less than 5 mol, the particles of the graft copolymer (A) tend to be more dispersible in the aqueous medium.

The above-listed reactive emulsifiers may be used alone or in combination of two or more.

The graft part contains the structural unit derived from the reactive emulsifier in an amount of preferably 0.1% by weight to 20.0% by weight, more preferably 0.1% by weight to 15.0% by weight, more preferably 1.0% by weight to 15.0% by weight, more preferably 1.0% by weight to 10.0% by weight, even more preferably 1.0% by weight to 8.0% by weight, still more preferably 1.0% by weight to 5.0% by weight, and particularly preferably 1.0% by weight to 4.0% by weight, in 100% by weight of all the structural units of the graft part. The above feature is advantageous in that a scale is much less or not produced during production of a water-based coating.

(Structural unit derived from monomer M (structural unit U))

The graft part further preferably contains a structural unit derived from a monomer M containing (a) at least one hydrolyzable silyl group in a molecule and (b) at least one ethylenically unsaturated group and/or at least one mercapto group. The above feature is advantageous in that a blister is less or not produced when a coating film obtained from the water-based coating is immersed in water.

The structural unit derived from the monomer M can be said to be a structural unit U. In a case where the graft part contains the structural unit U, the structural unit U contained in the polyorganosiloxane and the structural unit U contained in the graft part may be identical to or different from each other.

Specific examples of the monomer M are identical to those described in the foregoing (Structural unit U) section, and thus the descriptions in that section apply and are not repeated here. Note that in the graft part, one type of monomer M may be used alone, or two or more types of monomers M may be used in combination.

The hydrolyzable silyl group of the monomer M in the graft part is not particularly limited. The hydrolyzable silyl group of the monomer M in the graft part is particularly preferably an alkoxysilyl group because the alkoxysilyl group (a) has high crosslinking reactivity (vinyl polymerization reactivity), (b) is easy to handle, (c) is inexpensive, and (d) further reduces or eliminates production of a blister when a coating film obtained from the water-based coating is immersed in water.

The monomer M in the graft part is not particularly limited. The monomer M in the graft part is preferably a (meth)acryloyloxyalkylsilane, and more preferably any of β-methacryloyloxyethyldimethoxymethylsilane, 3-(meth)acryloyloxypropyltrimethoxysilane, 3-(meth)acryloyloxypropyldimethoxymethylsilane, 3-(meth)acryloyloxypropylmethoxydimethylsilane, 3-(meth)acryloyloxypropyltriethoxysilane, 3-(meth) acryloyloxypropyldiethoxymethylsilane, 3-(meth)acryloyloxypropyldiethoxyethylsilane, 3-(meth) acryloyloxypropylethoxydimethylsilane, 3-(meth)acryloyloxypropylethoxydiethylsilane, and δ-(meth)acryloyloxybutyldiethoxymethylsilane because such a monomer (a) has high crosslinking reactivity (vinyl polymerization reactivity), (b) is inexpensive, and (c) further reduces or eliminates production of a blister when a coating film obtained from the water-based coating is immersed in water.

The graft part contains the structural unit derived from the monomer M (structural unit U) in an amount of preferably 0.1% by weight to 20.0% by weight, more preferably 0.1% by weight to 15.0% by weight, more preferably 1.0% by weight to 15.0% by weight, even more preferably 1.0% by weight to 10.0% by weight, and particularly preferably 1.0% by weight to 8.0% by weight, in 100% by weight of all the structural units of the graft part. The above feature is advantageous in that a blister is much less or not produced when a coating film obtained from the water-based coating is immersed in water.

The graft part may further contain a structural unit derived from a monomer having a reactive group (hereinafter also referred to as a reactive group-containing monomer). The reactive group-containing monomer is preferably a monomer containing at least one type of reactive group selected from the group consisting of an epoxy group, an oxetane group, a hydroxy group, an amino group, an imide group, a carboxylic acid group, a carboxylic anhydride group, a cyclic ester, a cyclic amide, a benzoxazine group, and a cyanate ester group, and is more preferably a monomer containing at least one type of reactive group selected from the group consisting of an epoxy group, a hydroxy group, and a carboxylic acid group. The above feature is advantageous in that a coating film of a water-based coating has better adhesion to a base material.

Specific examples of the monomer having an epoxy group include glycidyl-group-containing vinyl monomers such as glycidyl (meth)acrylate, 4-hydroxybutyl (meth)acrylate glycidyl ether, and allyl glycidyl ether.

Specific examples of the monomer having a hydroxy group include (a) hydroxy straight-chain alkyl (meth)acrylates (in particular, hydroxy straight chain C1-C6 alkyl(meth)acrylates) such as 2-hydroxyethyl (meth)acrylate, hydroxypropyl (meth)acrylate, and 4-hydroxybutyl (meth)acrylate, (b) caprolactone-modified hydroxy (meth)acrylates, (c) hydroxy branching alkyl (meth)acrylates such as α-(hydroxymethyl) methyl acrylate and α-(hydroxymethyl) ethyl acrylate, and (d) hydroxyl-group-containing (meth)acrylates such as a mono (meth)acrylate of a polyester diol (in particular, a saturated polyester diol) obtained from a dicarboxylic acid (such as phthalic acid) and a dihydric alcohol (such as propylene glycol).

Specific examples of the monomer having a carboxylic acid group include: monocarboxylic acids such as acrylic acid, methacrylic acid, and crotonic acid; and dicarboxylic acids such as maleic acid, fumaric acid, and itaconic acid. Any of the monocarboxylic acids is suitably used as the monomer having a carboxylic acid group.

The above-listed reactive group-containing monomers may be used alone or in combination of two or more.

The graft part contains structural unit(s) derived from reactive group-containing monomer(s) in an amount of preferably 0.5% by weight to 90% by weight, more preferably 1% by weight to 50% by weight, even more preferably 2% by weight to 35% by weight, and particularly preferably 3% by weight to 20% by weight, in 100% by weight of the graft part. (a) The graft part that contains the structural unit(s) derived from reactive group-containing monomer(s) in an amount of not less than 0.5% by weight in 100% by weight of the graft part is advantageous in that a resulting water-based coating makes it possible to provide a coating film which has sufficient adhesion to a base material. (b) The graft part that contains the structural unit(s) derived from reactive group-containing monomer(s) in an amount of not more than 90% by weight in 100% by weight of the graft part is advantageous in that a resulting water-based coating makes it possible to provide a coating film which has sufficient adhesion to a base material, and the resulting water-based coating has good storage stability.

The structural unit(s) derived from reactive group-containing monomer(s) is/are preferably contained in the graft part, and more preferably contained only in the graft part.

(Crosslinked structure of graft part)

In a case where a polyfunctional monomer is used to prepare the graft part, a crosslinked structure can be introduced into the graft part. In an embodiment of the present invention, the graft part is preferably non-crosslinked. Note here that "the graft part is non-crosslinked" means that an amount of the polyfunctional monomer which is used to prepare the graft part is not more than 0.50% by weight in 100% by weight of the monomer mixture for graft part formation. In other words, in an embodiment of the present invention, the graft part is preferably substantially non-crosslinked. The amount of the polyfunctional monomer which is used to prepare the graft part is preferably not more than 0.50% by weight, more preferably not more than 0.20% by weight, even more preferably not more than 0.01% by weight, and particularly preferably not more than 0.01% by weight, in 100% by weight of the monomer mixture for graft part formation.

The graft part may be composed only of one type of polymer that has the identical structural unit composition (type and content), or may be composed of two or more types of polymers that differ in structural unit composition (type and content).

The following description will discuss a case where the graft part is constituted by a plurality of types of graft parts in an embodiment of the present invention. In this case, the graft part may (a) include a complex of a plurality of polymers separately formed by polymerization, or may include a polymer (multistage polymer) formed in order by polymerization.

The core part containing the polyorganosiloxane and the graft part may have a layer structure. For example, aspects of the present invention also include an aspect such that the core part containing the polyorganosiloxane is present as an innermost layer (also referred to as a core layer) and a layer of the graft part is present as an outermost layer (also referred to as a shell layer) on an outer side of the core part. A structure in which the core part containing the polyorganosiloxane is present as the core layer and the graft part is present as the shell layer can be said to be a core-shell structure. Thus, the graft copolymer (A) in which the core part containing the polyorganosiloxane and the graft part have a layer structure (core-shell structure) can be said to be a multilayered polymer or a core-shell polymer. Note, however, that the graft copolymer (A) is not limited to the above feature as long as the graft part is grafted to the polyorganosiloxane.

(Graft rate of graft part)

It is only necessary that at least a part of the graft part be grafted to the polyorganosiloxane. It is not necessary that all of the graft part be grafted to the polyorganosiloxane. In a case where a monomer mixture from which the graft part can be formed (monomer mixture for graft part formation) is polymerized in the presence of the polyorganosiloxane in preparation of the graft part during production of the graft copolymer (A), a polymer that is identical in composition to the graft part and that is not grafted to the polyorganosiloxane may be generated. In the present specification, a polymer that is generated during preparation of the graft part and is identical in composition to the graft part and that is not grafted to the polyorganosiloxane is also referred to as a "non-grafted polymer". The non-grafted polymer may be removed or need not be removed from a resulting aqueous latex of the graft copolymer (A). In other words, in an embodiment of the present invention, the water-based coating may have a polymer that is identical in composition to the graft part and that is not grafted to the polyorganosiloxane (non-grafted polymer). The non-grafted polymer contained in the water-based coating corresponds to the "polymer (B)", which will be described later.

In the present specification, a proportion of a polymer grafted to the polyorganosiloxane, i.e., the graft part, to polymers obtained in a step of preparing the graft part is referred to as a graft rate. The graft rate can be said to be a value represented by the following expression: (weight of graft part) / {(weight of graft part) + (weight of non-grafted polymer)} $\times$ 100.

Furthermore, in the step of preparing the graft part, soluble parts are also present in addition to the graft part and the non-grafted polymer. The soluble parts mean monomers not polymerized and auxiliary materials such as an initiator.

Examples of a method for determining whether a substance is the graft copolymer (A), a non-grafted polymer, or a soluble part include a method involving determining whether a substance is soluble/insoluble in a solvent. The method can be, for example, a method in which: (i) in a case where a substance is insoluble in MEK, the substance is determined to be the graft copolymer (A); (ii) in a case where a substance is soluble in MEK and insoluble in methanol, the substance is determined to be a non-grafted polymer; and (iii) in a case where a substance is soluble in MEK and soluble in methanol, the substance is determined to be a soluble part.

In the present specification, a method for calculating the graft rate is as follows. First, an aqueous latex containing the graft copolymer (A) is obtained. Subsequently, the aqueous latex in an amount equivalent to 2 g of a solid content in the aqueous latex and 50 ml of methylethylketone (MEK) are mixed to prepare an MEK solution. Then, the MEK solution thus obtained is separated into a component soluble in MEK (MEK-soluble part) and a component insoluble in MEK (MEK-insoluble part) by, for example, centrifugation. Next, 20 ml of the MEK-soluble part is mixed with 200 ml of methanol, and an aqueous calcium chloride solution obtained by dissolving 0.01 g of calcium chloride in water is added to a resulting mixture, and the mixture is stirred for 1 hour. Thereafter, the mixture thus obtained is separated into a methanol-soluble part and a methanol-insoluble part.

The graft rate is calculated with use of the following equation:

Graft rate (%) = 100 - [(weight of methanol-insoluble part) / {(weight of methanol-insoluble part) + (weight of MEK-insoluble part)}] / (total amount of monomer mixture for graft part formation used to prepare graft part) $\times$ 10,000

In the above-described method for calculating the graft rate, (a) the MEK-insoluble part is the graft copolymer (A), and (b) the methanol-insoluble part of the MEK-soluble part is the non-grafted polymer.

The graft rate of the graft part is preferably not more than 85.0%, more preferably not more than 80.0%, more preferably not more than 75.0%, more preferably not more than 70.0%, more preferably not more than 65.0%, more preferably not more than 60.0%, more preferably not more than 55.0%, more preferably not more than 50.0%, more preferably not more than 45.0%, more preferably not more than 40.0%, even more preferably not more than 35.0%, and particularly preferably not more than 30.0%. The graft rate that is not more than 85.0% is advantageous in that the water-based coating has excellent film formability.

The graft rate of the graft part is preferably not less than 30.0%, more preferably not less than 35.0%, more preferably not less than 40.0%, more preferably not less than 45.0%, more preferably not less than 50.0%, more preferably not less than 55.0%, more preferably not less than 60.0%, more preferably not less than 65.0%, more preferably not less than 70.0%, more preferably not less than 75.0%, even more preferably not less than 80.0%, and particularly preferably not less than 85.0%. The graft rate that is not less than 30.0% is advantageous in that (a) the water-based coating has a not too high viscosity and (b) a scale is less or not produced during production of the water-based coating.

The graft rate of the graft part can be adjusted as appropriate by changing, for example, an amount of a chain transfer agent used to prepare the graft part and an amount of the monomer M used to prepare the polyorganosiloxane.

(Glass transition temperature of graft part)

A glass transition temperature of the graft part is not particularly limited. The "glass transition temperature" may be hereinafter also referred to as "Tg". The Tg of the graft part is, for example, preferably not higher than 100°C, preferably lower than 100°C, more preferably not higher than 90°C, preferably not higher than 80°C, more preferably not higher than 70°C, more preferably not higher than 60°C, more preferably not higher than 50°C, more preferably not higher than 45°C, more preferably not higher than 40°C, more preferably not higher than 35°C, more preferably not higher than 30°C, more preferably not higher than 25°C, more preferably not higher than 20°C, more preferably not higher than 15°C, more preferably not higher than 10°C, more preferably not higher than 5°C, more preferably not higher than 0°C, more preferably not higher than -5°C, more preferably not higher than -10°C, even more preferably not higher than -15°C, and particularly preferably not higher than -20°C. The above feature is advantageous in that the water-based coating has excellent film formability. Further, the inventors of the present invention uniquely found that a scale is surprisingly less or not produced during production of the water-based coating in a case where the Tg of the graft part has an upper limit which is lower than 100°C.

The Tg of the graft part is, for example, preferably not lower than -30°C, more preferably not lower than -25°C, more preferably not lower than -20°C, more preferably not lower than -15°C, more preferably not lower than -10°C, more preferably not lower than -5°C, more preferably not lower than 0°C, more preferably not lower than 5°C, more preferably not lower than 10°C, more preferably not lower than 15°C, more preferably not lower than 20°C, more preferably not lower than 25°C, more preferably not lower than 30°C, more preferably not lower than 35°C, and particularly preferably not lower than 40°C. The inventors of the present invention uniquely found that, in a case the Tg of the graft part has a lower limit which is in the above-described range, a blister is surprisingly less or not produced when a coating film obtained from the water-based coating is immersed in water.

The Tg of the graft part can be determined by, for example, the composition of a structural unit contained in the graft part. In other words, it is possible to adjust Tg of a resulting graft part by changing the composition of the monomer mixture for graft part formation used to prepare the graft part.

In a case where the graft part is a homopolymer of one type of monomer and the monomer used to produce (form by polymerization) the graft part is known, the glass transition temperature Tg of the graft part can be regarded as Tg (°C) of the homopolymer of the monomer. For the Tg of the homopolymer, for example, numerical values disclosed in Polymer Handbook Fourth Edition (edited by J. Brandup et al., Jphn Wiley 8s Sons, Inc) can be used.

The following description will discuss a case where the graft part is a copolymer of two or more types of monomers and the monomers used to produce (form by polymerization) the graft part are known (hereinafter referred to as "case A"). In the case A, the glass transition temperature Tg of the graft part can be calculated by the following FOX equation (Mathematical expression 1).

$$1/Tg = w_1/Tg_1 + w_2/Tg_2 + ... + w_n/Tg_n \qquad \text{(Mathematical expression 1)}$$

where: $Tg_1$, $Tg_2$, ..., $Tg_n$ are each Tg (K) of a homopolymer of components of the graft part (i.e., monomers used to produce the graft part) 1, 2, ..., n, and $w_1$, $w_2$, ..., and $w_n$ are weight fractions of the components of the graft part (i.e., monomers used to produce the graft part) 1, 2, ..., n.

In the case A where the reactive emulsifier and the monomer X are each used in an amount of not more than 20.0% by weight in 100% by weight of the monomer mixture for graft part formation, the glass transition temperature Tg of the graft part is calculated by the FOX equation (Mathematical expression 1) with the reactive emulsifier and the monomer X excluded from the monomers used to produce the graft part. That is, by replacing the monomers used to produce the graft part with the monomers different from the reactive emulsifier and the monomer X, the glass transition temperature Tg of the graft part is calculated by the FOX equation (Mathematical expression 1).

In a case where the monomers used to produce (form by polymerization) the graft part are unknown, the Tg of the graft part can be obtained by carrying out viscoelasticity measurement with use of a planar plate made of the graft copolymer (A). Specifically, the Tg can be measured as follows: (1) a graph of tanδ is obtained by carrying out dynamic viscoelasticity measurement with respect to a planar plate made of the graft copolymer (A), with use of a dynamic viscoelasticity measurement device (for example, DVA-200, available from IT Keisoku Seigyo Kabushikigaisha) under a tension condition; and (2) in the graph of tanδ thus obtained, a peak temperature of tanδ is regarded as the glass transition temperature. Note here that, in a case where a plurality of peaks are obtained in the graph of tanδ, the highest peak temperature is regarded as the glass transition temperature of the graft part.

(Physical properties of graft copolymer (A))

The following description will discuss physical properties of the graft copolymer (A).

(Volume-average particle size of graft copolymer (A))

The graft copolymer (A) has a volume-average particle size (Mv) of preferably 0.05 μm to 60.00 μm, more preferably 0.10 μm to 20.00 μm, more preferably 0.10 μm to 8.00 μm, more preferably 0.10 μm to 6.00 μm, more preferably 0.10 μm to 4.00 μm, more preferably 0.10 μm to 2.00 μm, even more preferably 0.10 μm to 1.00 μm, and particularly preferably 0.10 μm to 0.80 μm. This is because such a graft copolymer (A) makes it possible to obtain a water-based coating that has a desired viscosity and that is highly stable. The above feature is advantageous in that the graft copolymer (A) is stably polymerized and the water-based coating has excellent storage stability. Note that, in the present specification, the "volume-average particle size (Mv) of the graft copolymer (A)" means a volume-average particle size of primary particles of the graft copolymer (A) unless otherwise mentioned. The volume-average particle size of the graft copolymer (A) can be measured with use of, for example, a dynamic light scattering type particle size distribution measurement apparatus by using, as a test specimen, a water-based coating or an aqueous latex containing the graft copolymer (A). The volume-average particle size of the graft copolymer (A) will be discussed in detail in Examples described later.

A particle-number-based distribution of the particle size of the graft copolymer (A) in a water-based coating preferably has a full width at half maximum which is not less than 0.5 times and not more than 1 time the volume-average particle size. The above feature is advantageous in that the water-based coating has a low viscosity and is easy to handle.

A method for producing the graft copolymer (A) will be discussed in detail in the [Method for producing water-based coating] section described later.

(2-2. Polymer (B))

The present water-based coating contains the polymer (B). The polymer (B) in a water-based coating can contribute to an improvement in film formability of the water-based coating. The polymer (B) can be included mainly during a process of producing the graft copolymer (A). Specifically, a polymer not bound to the polyorganosiloxane (non-grafted polymer) is generated in the step of preparing the graft part during production of the graft copolymer (A). By not removing the non-grafted polymer from a resulting aqueous latex of the graft copolymer (A), the non-grafted polymer can be the polymer (B) in a resulting water-based coating. Note that the polymer (B) is not limited to that included during the above-described process of producing the graft copolymer (A), and also includes a polymer that is separately added. A polymer that is separately added as the polymer (B) is obtained by polymerizing a monomer mixture for formation of the polymer (B), separately from, for example, production of the graft copolymer (A).

The polymer (B) contains a structural unit derived from at least one type of monomer selected from the group consisting of an aromatic vinyl monomer, a vinyl cyanide monomer, and a (meth)acrylate monomer. The above feature is advantageous in that a resulting water-based coating has excellent film formability.

Specific examples of the aromatic vinyl monomer, the vinyl cyanide monomer, and the (meth)acrylate monomer are identical to those described in the foregoing (Graft part) section, and thus the descriptions in that section apply and are not repeated here.

The polymer (B) contains structural unit(s) derived from aromatic vinyl monomer(s), structural unit(s) derived from vinyl cyanide monomer(s), and structural unit(s) derived from (meth)acrylate monomer(s) in an amount of preferably 10% by weight to 95% by weight in total, more preferably 30% by weight to 92% by weight in total, even more preferably 50% by weight to 90% by weight in total, particularly preferably 60% by weight to 87% by weight in total, and most preferably 70% by weight to 85% by weight in total, in 100% by weight of all structural units of the polymer (B). The above feature is advantageous in that a resulting water-based coating has more excellent film formability.

From the viewpoint that a resulting water-based coating has excellent film formability by making it possible, with use of any of the (meth)acrylate monomers listed below, to design a glass transition temperature of the polymer (B) so that the glass transition temperature is set low (e.g., at a temperature of not higher than 80°C), the (meth)acrylate monomer is preferably at least one selected from the group consisting of methyl acrylate, ethyl (meth)acrylate, and butyl (meth)acrylate, more preferably at least one selected from the group consisting of methyl acrylate, butyl methacrylate, and butyl acrylate, even more preferably at least one selected from the group consisting of butyl methacrylate and butyl acrylate, and particularly preferably butyl methacrylate. In terms of reactivity during formation (polymerization) of the polymer (B), the (meth)acrylate monomer is preferably methyl methacrylate. Note that, in a case where the polymer (B) is derived from the graft part, "reactivity during formation (polymerization) of the polymer (B)" means "reactivity during graft part formation". A glass transition temperature of a resulting polymer (B) can be adjusted to a desired temperature by forming the monomer mixture for graft part formation or the monomer mixture for formation of the polymer (B) by mixing (i) at least one selected from the group consisting of methyl acrylate, ethyl (meth)acrylate, and butyl (meth)acrylate each having a relatively low homopolymer glass transition temperature and (ii) methyl methacrylate having a relatively high homopolymer glass transition temperature.

The polymer (B) contains a structural unit derived from methyl methacrylate and a structural unit derived from butyl methacrylate in order to achieve both film formability of the water-based coating and reactivity during formation (polymerization) of the polymer (B).

The polymer (B) contains structural unit(s) derived from (meth)acrylate monomer(s) in an amount of preferably 10% by weight to 100% by weight, more preferably 30 weight% to 100 weight%, even more preferably 50 weight% to 100 weight%, still more preferably more than 50% by weight and not more than 100% by weight, particularly preferably 70 weight% to 100 weight%, and most preferably 90 weight% to 100 weight%, in 100% by weight of all the structural units of the polymer (B). The above feature is advantageous (i) in that a resulting water-based coating has further excellent film formability by the polymer (B) having a lower glass transition temperature (e.g., a temperature lower than 80°C) and/or (ii) in that reactivity is excellent during formation (polymerization) of the polymer (B). The polymer (B) may contain structural unit(s) derived from (meth)acrylate monomer(s) in an amount of 100% by weight in 100% by weight of all the structural units of the polymer (B). That is, the polymer (B) may be composed only of the structural unit(s) derived from (meth)acrylate monomer(s).

(Glass transition temperature of polymer (B))

A glass transition temperature (Tg) of the polymer (B) is not particularly limited. The Tg of the polymer (B) is, for example, preferably not higher than 100°C, preferably lower than 100°C, more preferably not higher than 90°C, preferably not higher than 80°C, more preferably not higher than 70°C, more preferably not higher than 60°C, more preferably not higher than 50°C, more preferably not higher than 45°C, more preferably not higher than 40°C, more preferably not higher than 35°C, more preferably not higher than 30°C, more preferably not higher than 25°C, more preferably not higher than 20°C, more preferably not higher than 15°C, more preferably not higher than 10°C, more preferably not higher than 5°C, more preferably not higher than 0°C, more preferably not higher than -5°C, more preferably not higher than -10°C, even more preferably not higher than -15°C, and particularly preferably not higher than -20°C. The above feature is advantageous in that the water-based coating has excellent film formability. Further, the inventors of the present invention uniquely found that a scale is surprisingly less or not produced during production of the water-based coating in a case where the Tg of the polymer (B) has an upper limit which is lower than 100°C.

The Tg of the polymer (B) is, for example, preferably not lower than -30°C, more preferably not lower than -25°C, more preferably not lower than -20°C, more preferably not lower than -15°C, more preferably not lower than -10°C, more preferably not lower than -5°C, more preferably not lower than 0°C, more preferably not lower than 5°C, more preferably not lower than 10°C, more preferably not lower than 15°C, more preferably not lower than 20°C, more preferably not lower than 25°C, more preferably not lower than 30°C, more preferably not lower than 35°C, and particularly preferably not lower than 40°C. The inventors of the present invention uniquely found that, in a case the Tg of the polymer (B) has a lower limit which is in the above-described range, a blister is surprisingly less or not produced when a coating film obtained from the water-based coating is immersed in water.

The Tg of the polymer (B) can be determined by, for example, the composition of a structural unit contained in the polymer (B). In other words, it is possible to adjust Tg of a resulting polymer (B) by changing the composition of the monomer mixture for graft part formation used to prepare the graft part or of the monomer mixture for formation of the polymer (B) used to separately prepare the polymer (B).

In a case where the polymer (B) is a homopolymer of one type of monomer and the monomer used to produce (form by polymerization) the polymer (B) is known, the glass transition temperature Tg of the polymer (B) can be regarded as Tg (°C) of the homopolymer of the monomer. For the Tg of the homopolymer, for example, numerical values disclosed in Polymer Handbook Fourth Edition (edited by J. Brandup et al., Jphn Wiley 8s Sons, Inc) can be used.

The following description will discuss a case where the polymer (B) is a copolymer of two or more types of monomers and the monomers used to produce (form by polymerization) the polymer (B) are known (hereinafter referred to as "case B"). In the case B, the glass transition temperature Tg of the polymer (B) can be calculated by the above-described FOX equation (Mathematical expression 1).

In the case B where the reactive emulsifier and the monomer X are each used in an amount of not more than 20.0% by weight in 100% by weight of a total of the monomer mixture for graft part formation and the monomer mixture for formation of the polymer (B), the glass transition temperature Tg of the polymer (B) is calculated by the FOX equation (Mathematical expression 1) with the reactive emulsifier and the monomer X excluded from the monomers used to produce the polymer (B). That is, by replacing the monomers used to produce the polymer (B) with the monomers different from the reactive emulsifier and the monomer X, the glass transition temperature Tg of the polymer (B) is calculated by the FOX equation (Mathematical expression 1).

An amount of the polymer (B) contained in the present water-based coating is not particularly limited. The polymer (B) is contained in the present water-based coating in an amount of preferably not less than 5.0% by weight, more preferably not less than 6.0% by weight, more preferably not less than 7.0% by weight, more preferably not less than 8.0% by weight, more preferably not less than 9.0% by weight, more preferably not less than 10.0% by weight, more preferably not less than 11.0% by weight, more preferably not less than 12.0% by weight, more preferably not less than 13.0% by weight, more preferably not less than 14.0% by weight, more preferably not less than 15.0% by weight, more preferably not less than 16.0% by weight, even more preferably not less than 17.0% by weight, and particularly preferably not less than 18.0% by weight, in 100% by weight of a total of the graft copolymer (A) and the polymer (B). The above feature is advantageous in that the water-based coating has more excellent film formability.

The polymer (B) is contained in the present water-based coating in an amount of preferably not more than 30.0% by weight, more preferably not more than 28.0% by weight, more preferably not more than 26.0% by weight, more preferably not more than 24.0% by weight, more preferably not more than 22.0% by weight, more preferably not more than 20.0% by weight, more preferably not more than 19.0% by weight, more preferably not more than 18.0% by weight, more preferably not more than 17.0% by weight, more preferably not more than 16.0% by weight, more preferably not more than 15.0% by weight, more preferably not more than 14.0% by weight, more preferably not more than 13.0% by weight, more preferably not more than 12.0% by weight, more preferably not more than 11.0% by weight, more preferably not more than 10.0% by weight, more preferably not more than 9.0% by weight, more preferably not more than 8.0% by weight, even more preferably not more than 7.0% by weight, and particularly preferably not more than 6.0% by weight, in 100% by weight of the total of the graft copolymer (A) and the polymer (B). The above feature is advantageous in that a scale is less or not produced during production of the water-based coating.

The following description will discuss a case where a non-grafted polymer obtained during production of the graft copolymer (A) is not removed from the aqueous latex of the graft copolymer (A) and a separately prepared polymer is not blended (hereinafter referred to as "case C"). In the case (C), the polymer (B) is derived from the non-grafted polymer only. In the case (C), the structural unit composition (type and content) of the graft part and the structural unit composition of the polymer (B) are identical. Thus, the Tg of the graft part and the Tg of the polymer (B) have identical values. In the case C where a polymerization conversion rate during production of the graft copolymer (A) is 100%, a total of (i) an amount (%) of the polymer (B) contained in 100% by weight of a total of the graft part and the polymer (B) and (ii) the graft rate is 100%. In the case C, the amount (%) of the polymer (B) contained in 100% by weight of the total of the graft part and the polymer (B) can be adjusted as appropriate by changing, for example, an amount of a chain transfer agent used to prepare the graft part and an amount of the monomer M used to prepare the polyorganosiloxane.

In an embodiment of the present invention, a polymer prepared separately from the graft copolymer (A) may be added to the aqueous latex of the graft copolymer (A) or a water-based coating and used as the polymer (B). In a case where a non-grafted polymer obtained during production of the graft copolymer (A) is not removed from the aqueous latex of the graft copolymer (A) and a separately prepared polymer is blended, the polymer (B) is derived from the non-grafted polymer and the blended separately prepared polymer. In a case where a non-grafted polymer obtained during production of the graft copolymer (A) is removed from the aqueous latex of the graft copolymer (A) and a separately prepared polymer is blended, the polymer (B) is derived from the blended separately prepared polymer only.

The polyorganosiloxane is contained in the present water-based coating in an amount of preferably 55% by weight to 95% by weight, more preferably 55% by weight to 90% by weight, more preferably 60 weight% to 90 weight%, even more preferably 65 weight% to 85 weight%, and particularly preferably 70 weight% to 85 weight%, in 100% by weight of the total of the graft copolymer (A) and the polymer (B). (a) The polyorganosiloxane that is contained in an amount of not less than 55% by weight in 100% by weight of the total of the graft copolymer (A) and the polymer (B) is advantageous in that the water-based coating makes it possible to provide a more highly water-repellent coating film. (b) The polyorganosiloxane that is contained in an amount of not more than 95% by weight in 100% by weight of the total of the graft copolymer (A) and the polymer (B) is advantageous in that the water-based coating has more excellent film formability.

A complex of the graft copolymer (A) and the polymer (B) has a weight-average molecular weight of preferably not more than 150,000, more preferably not more than 120,000, even more preferably not more than 100,000, and particularly preferably not more than 90,000. The above feature is advantageous in that the water-based coating has more excellent film formability. The complex of the graft copolymer (A) and the polymer (B) has a weight-average molecular weight of preferably not less than 5,000, more preferably not less than 10,000, even more preferably not less than 15,000, and particularly preferably not less than 20,000. The above feature is advantageous in that a resulting water-based coating has excellent film formability.

In the present specification, a value obtained by carrying out measurement by the following method is regarded as a "weight-average molecular weight of the complex of the graft copolymer (A) and the polymer (B)". (1) An aqueous latex containing the graft copolymer (A) and the polymer (B) is obtained. (2) An aqueous latex in an amount equivalent to 20 mg of a solid content in the aqueous latex and 10 mL of tetrahydrofuran are mixed to prepare a liquid mixture. (3) The liquid mixture is filtered with a PTFE filter (0.2 pm). (4) A filtrate obtained in (3) above is subjected to HLC-82201 (available from Tosoh Corporation), and a weight-average molecular weight is measured.

Regardless of from what the polymer (B) is derived, the graft copolymer (A) and the polymer (B) can form the complex in the aqueous latex of the graft copolymer (A) or in both the aqueous latex and the water-based coating. Thus, in the present specification, the value obtained by carrying out measurement by the above-described method is regarded as the "weight-average molecular weight of the complex of the graft copolymer (A) and the polymer (B)" regardless of from what the polymer (B) is derived. The "aqueous latex containing the graft copolymer (A) and the polymer (B)" in the method for measuring the weight-average molecular weight can be said to be an "aqueous latex of the complex of the graft copolymer (A) and the polymer (B)". In the above-described case C, the "aqueous latex containing the graft copolymer (A) and the polymer (B)" in the method for measuring the weight-average molecular weight is the aqueous latex of the graft copolymer (A) or the water-based coating.

(2-3. Antifouling agent)

The present water-based coating may further contain an antifouling agent. The present water-based coating has an antifouling property against underwater life without containing the antifouling agent. Thus, the present water-based coating can be suitably used as an antifouling coating for an underwater structure without containing the antifouling agent. The present water-based coating preferably further contains the antifouling agent because the antifouling agent enables a water-based coating to provide a coating film that has a more excellent antifouling property against underwater life and/or a coating film that has a longer lasting antifouling property against underwater life. In contrast, a coating film obtained from a water-based coating that does not contain the antifouling agent is less prone to damage than a coating film obtained from a water-based coating that contains the antifouling agent. Thus, the coating film obtained from the water-based coating that does not contain the antifouling agent has an advantage of having higher durability than the coating film obtained from the water-based coating that contains the antifouling agent.

The antifouling agent is not particularly limited, and a known antifouling agent can be used. Examples of the antifouling agent include inorganic compounds, metal-containing organic compounds, and metal-free organic compounds.

Examples of the antifouling agent include: metal salts such as zinc oxides, cuprous oxides, 2-pyridinethiol-1-oxide zinc salts (also called zinc pyrithione), and copper salts; pyrithione salt compounds; p-isopropyl pyridine methyldiphenylborane; pyridine triphenylborane; tetramethylthiuram disulfide; carbamate-based compounds (such as zinc dimethyldithiocarbamate, zinc ethylenebisdithiocarbamate, 3-iodo-2-propyl butylcarbamate, bisdimethyl dithiocarbamoyl zinc ethylenebisdithiocarbamate, and manganese-2 ethylene bisdithiocarbamate); 2-methylthio-4-t-butylamino-6-cyclopropylamino-s-triazine; 2,4,5,6-tetrachloroisophthalonitrile; N,N-dimethyl dichlorophenyl urea; copper rhodanide; 4,5,-dichloro-2-n-octyl-3(2H)isothiazolone (also called 4,5-dichloro-2-n-octyl-4-isothiazolin-3-one); N-(fluorodichloromethylthio) phthalimide; N,N'-dimethyl-N'-phenyl-(N-fluorodichloromethylthio) sulfamide; tetramethylthiuram disulfide; 2,4,6-trichlorophenylmaleimide; 2,3,5,6-tetrachloro-4-(methylsulfonyl)pyridine; diiodomethyl paratrisulfone; phenyl(bispyridyl)bismuth dichloride; 2-(4-thiazolyl)-benzimidazole; triphenylboron pyridine salt; stearylamine-triphenylboron; laurylamine-triphenylboron; 1,1-dichloro-N-[(dimethylamino)sulfonyl]-1-fluoro-N-phenylmethanesulfenamide; 1,1-dichloro-N-[(dimethylamino)sulfonyl]-1-fluoro-N-(4-methylphenyl) methane sulfenamide; N'-(3,4-dichlorophenyl)-N,N'-dimethylurea; N'-tert-butyl-N-cyclopropyl-6-(methylthio)-1,3,5-triazine-2,4-diamine; and 4-bromo-2-(4-chlorophenyl)-5-(trifluoromethyl)-1H-pyrrole-3-carbonitrile.

(2-4. Organic solvent)

The present water-based coating may contain an organic solvent. The present water-based coating has an advantage of having excellent film formability without containing the organic solvent. A water-based coating that contains the organic solvent has an advantage of having more excellent film formability. Examples of the organic solvent include hydrocarbons, halogenated hydrocarbons, ethers, esters, ketones, and alcohols. Examples of the organic solvent that is a hydrocarbon include n-hexane, isohexane, n-heptane, n-octane, isooctane, n-decane, n-dodecane, cyclohexane, methylcyclohexane, cyclopentane, toluene, xylene, benzene, ethylbenzene, decalin, white spirit, and naphtha. Examples of the organic solvent that is a halogenated hydrocarbon include methylene chloride, chloroform, tetrachloroethane, and trichloroethylene. Examples of the organic solvent that is an ether include dioxane, ethyl ether, diethyl ether, butyl diglycol, 2-butoxyethanol, tetrahydrofuran, tetrahydropyran, ethylene glycol monomethyl ether, ethylene glycol monoethyl ether, ethylene glycol monobutyl ether, ethylene glycol diethyl ether, ethylene glycol dibutyl ether, diethylene glycol monomethyl ether, diethylene glycol monoethyl ether, propylene glycol monomethyl ether, propylene glycol monomethyl ether acetate (also called PMAC), propylene glycol methyl ether, dipropylene glycol methyl ether, tripropylene glycol methyl ether, propylene glycol-n-propyl ether, dipropylene glycol-n-propyl ether, propylene glycol-n-butyl ether, dipropylene glycol-n-butyl ether, tripropylene glycol-n-butyl ether, propylene glycol methyl ether acetate, dipropylene glycol methyl ether acetate, propylene glycol diacetate, propylene glycol phenyl ether, and dipropylene glycol dimethyl ether. Examples of the organic solvent that is an ester include methyl acetate, ethyl acetate, propyl acetate, butyl acetate, benzyl acetate, methoxypropyl acetate, ethylene glycol monomethyl ether acetate, ethylene glycol monoethyl ether acetate, n-butyl acetate, and 2-ethoxyethyl acetate. Examples of the organic solvent that is a ketone include acetone, methylethylketone, diethyl ketone, ethyl isobutyl ketone, methyl isobutyl ketone (also called MIBK), methyl isoamyl ketone, and diacetone alcohol. Examples of the organic solvent that is an alcohol include methanol, ethanol, n-propanol, (iso)propanol, n-butanol, isobutanol, benzyl alcohol, ethylene glycol, and propylene glycol. A mixture of any of the above-listed alcohols and water can also be used as the organic solvent. Examples of the organic solvent also include dimethylformamide, dimethylsulfoxide, and N-methylpyrrolidone. Such organic solvents may be used alone or in combination of two or more.

From the viewpoints of environmental conservation and safety and health, a smaller amount of the organic solvent is preferably contained in the present water-based coating. The organic solvent is contained in the present water-based coating in an amount of preferably not more than 20 parts by weight, more preferably not more than 15 parts by weight, even more preferably not more than 10 parts by weight, and particularly preferably not more than 5 parts by weight, in 100 parts by weight of the water-based coating.

(2-5. Other optional component(s))

The present water-based coating may contain, as necessary, other optional component(s) different from the above-listed components. Examples of the other optional component(s) include curing agents, coloring agents such as pigments and colorants, extenders, pigment dispersing agents, ultraviolet ray absorbing agents, antioxidants, heat stabilizers (antigelling agents), stabilizers, plasticizing agents, leveling agents, defoaming agents, silane coupling agents, antistatic agents, flame retardants, lubricants, viscosity reducers, thickeners, viscosity modifiers, thixotropy-imparting agents, shrinkage reducing agents, inorganic fillers, organic fillers, thermoplastic resins, desiccants, wetting agents, dispersing agents, anti-sag agents, antiflooding agents, anti-settling agents, coating film wear regulating agents, surface control agents, film forming aids, antibacterial agents, fungicides, preservatives, antifreezing agents, tackifiers, and anticorrosives.

[3. Method for producing water-based coating]

A method for producing a water-based coating in accordance with an embodiment of the present invention includes: a step 1 of obtaining a polyorganosiloxane by polymerizing a monomer mixture for polyorganosiloxane formation, the monomer mixture containing (a) an organosiloxane and (b) a monomer M containing (b-1) at least one hydrolyzable silyl group in a molecule and (b-2) at least one ethylenically unsaturated group and/or at least one mercapto group; and a step 2 of polymerizing, in the presence of the polyorganosiloxane obtained in the step 1, a monomer mixture for graft part formation, wherein the monomer mixture for polyorganosiloxane formation is contained in an amount of 55% by weight to 90% by weight in 100% by weight of a total of the monomer mixture for polyorganosiloxane formation and the monomer mixture for graft part formation, in the step 1, a polyfunctional alkoxysilane compound and a polyfunctional monomer are used in a total amount of not more than 0.50% by weight in 100% by weight of the monomer mixture for polyorganosiloxane formation, in the step 2, the monomer mixture for graft part formation contains at least one type of monomer selected from the group consisting of an aromatic vinyl monomer, a vinyl cyanide monomer, and a (meth)acrylate monomer, and in the step 2, a chain transfer agent is used in an amount of 0.01 parts by weight to 5.00 parts by weight with respect to 100 parts by weight of the monomer mixture for graft part formation.

The method for producing a water-based coating in accordance with an embodiment of the present invention includes the above feature, and thus makes it possible to provide a water-based coating that makes it possible to provide a highly water-repellent coating film and that has excellent film formability.

In the present specification, "a method for producing a water-based coating in accordance with an embodiment of the present invention" may also be referred to as "the present production method".

The following description will discuss steps of the present production method in detail. Matters other than those described below (for example, components and amounts of the components added, etc.) are not particularly limited, and the foregoing descriptions in the [2. Water-based coating] section apply as appropriate.

(3-1. Step 1)

A step 1 is a step of preparing a polyorganosiloxane.

An organosiloxane contained in the monomer mixture for polyorganosiloxane formation is not particularly limited. In the step 1, a known organosiloxane is preferably used, for example, so that a polyorganosiloxane which contains a structural unit(s) (organosiloxane-based unit(s)) described in the foregoing (Organosiloxane-based unit) section can be obtained.

In the step 1, examples of the organosiloxane as a material include: (a) dimethyldialkoxysilanes such as dimethyldimethoxysilane and dimethyldiethoxysilane; (b) three or more membered ring organosiloxane-based cyclic bodies such as hexamethylcyclotrisiloxane, octamethylcyclotetrasiloxane, decamethylcyclopentasiloxane, dodecamethylcyclohexasiloxane, trimethyltriphenylcyclotrisiloxane, tetradecamethylcycloheptasiloxane, and dimethylcyclics (dimethylsiloxane cyclic oligomers mixture of trimers to heptamers); and (c) dimethyldichlorosilane. Other examples of the organosiloxane as a material include a linear or branched organosiloxane.

In the step 1, a prepolymerized polyorganosiloxane can be used as the organosiloxane. In this case, a molecular chain end of the polyorganosiloxane may be capped with, for example, a hydroxy group, an alkoxy group, a trimethylsilyl group, a dimethylvinylsilyl group, a methylphenylvinylsilyl group, or a methyldiphenylsilyl group.

The organosiloxane serving as a material and used in the step 1 is preferably any of three or more membered ring organosiloxane-based cyclic bodies such as hexamethylcyclotrisiloxane, octamethylcyclotetrasiloxane, decamethylcyclopentasiloxane, dodecamethylcyclohexasiloxane, trimethyltriphenylcyclotrisiloxane, tetradecamethylcycloheptasiloxane, and dimethylcyclics (dimethylsiloxane cyclic oligomers mixture of trimers to heptamers) because such a material is easily available and makes it easy to prepare the polyorganosiloxane.

Specific examples of a monomer M that is contained in the monomer mixture for polyorganosiloxane formation are identical to those described in the foregoing (Structural unit U) section, and thus the descriptions in that section apply and are not repeated here.

An amount of the monomer M used in the step 1 is correlated with an amount of the structural unit U contained in a resulting polyorganosiloxane. The amount of the monomer M used in the step 1 is not particularly limited and is preferably such that the structural unit U is contained in an amount of 0.001% by weight to 10.0% by weight in 100% by weight of the polyorganosiloxane. The amount of the monomer M used in the step 1 is, for example, preferably 0.001% by weight to 10.0% by weight, more preferably 0.001% by weight to 5.0% by weight, even more preferably 0.01% by weight to 5.0% by weight, and particularly preferably 1.0% by weight to 5.0% by weight, in 100% by weight of the monomer mixture for polyorganosiloxane formation. The above feature is advantageous in that (a) it is possible to efficiently polymerize the monomer mixture for graft part formation in the presence of the polyorganosiloxane.

In the step 1, a method for polymerizing the organosiloxane with the monomer M is exemplified by, but not particularly limited to, a known emulsion polymerization method carried out in the presence of an acidic emulsifier.

The acidic emulsifier is not particularly limited. In a case where an organosiloxane-based cyclic body is used, the acidic emulsifier is preferably an acidic emulsifier that makes it possible to ring-open the organosiloxane-based cyclic body. Suitable examples of the acidic emulsifier include dodecylbenzenesulfonic acid. An amount of the acidic emulsifier used is not particularly limited and may be set as appropriate in accordance with, for example, (a) desired volume-average particle sizes of the polyorganosiloxane and the graft copolymer (A), (b) a solid content (monomer mixture) concentration in a reaction solution, (c) a polymerization condition such as a polymerization temperature, and (d) use/nonuse of an additive such as a surfactant and an amount of the additive used.

A volume-average particle size of a resulting polyorganosiloxane can be controlled by, for example, (a) a degree of preliminary dispersion of the material, (b) an amount of the emulsifier used, (c) the polymerization temperature, and (d) a method for supplying the material.

In a case where a polyorganosiloxane is obtained by emulsion polymerization in the presence of the acidic emulsifier, a resulting aqueous latex is strongly acidic and is preferably neutralized after a polymerization reaction is ended. A basic compound used for neutralization is exemplified by, but not particularly limited to, sodium hydroxide, potassium hydroxide, ammonia, and triethylamine. In a case where any of these basic compounds is added directly or in the form of an aqueous solution to the aqueous latex that contains the polyorganosiloxane, the aqueous latex can be neutralized.

In the step 1, a polyfunctional alkoxysilane compound and a polyfunctional monomer are used in a total amount of not more than 0.50% by weight in 100% by weight of the monomer mixture for polyorganosiloxane formation. The above feature makes it possible to obtain a non-crosslinked polyorganosiloxane.

(3-2. Step 2)

A step 2 is a step of preparing a graft part grafted to the polyorganosiloxane.

The graft part can be formed in the presence of the polyorganosiloxane by polymerizing, by known radical polymerization, the monomer used to form the graft part (monomer mixture for graft part formation). In a case where the polyorganosiloxane is obtained by emulsion polymerization in the presence of the above-described acidic emulsifier (i.e., in a case where the polyorganosiloxane is obtained as an aqueous latex), the graft part is preferably formed by polymerization by an emulsion polymerization method. The graft part can be produced by, for example, a method disclosed in PCT International Publication No. WO 2005/028546.

The monomer mixture for graft part formation contains at least one type of monomer selected from the group consisting of an aromatic vinyl monomer, a vinyl cyanide monomer, and a (meth)acrylate monomer. The above feature is advantageous in that a resulting water-based coating has excellent film formability.

A type and an amount of a monomer contained in the monomer mixture for graft part formation can determine a type and an amount of a structural unit of a resulting graft part. Thus, the type and the amount of the monomer contained in the monomer mixture for graft part formation may be set as appropriate so that the graft part described in the foregoing (Graft part) section can be obtained.

In a case where the emulsion polymerization method is employed in the step 2, a pyrolytic initiator can be used as a radical polymerization initiator. Examples of the pyrolytic initiator include known initiators such as 2,2'-azobisisobutyronitrile, hydrogen peroxide, potassium persulfate, and ammonium persulfate.

A redox initiator can also be used as the radical polymerization initiator. The redox initiator is an initiator that contains a combination of (a) a peroxide(s) such as an organic peroxide and/or an inorganic peroxide and (b) as necessary a reducing agent(s) such as sodium formaldehyde sulfoxylate and/or glucose, as necessary a transition metal salt such as iron (II) sulfate, as necessary a chelating agent such as disodium ethylenediaminetetraacetate, and/or as necessary a phosphorus-containing compound such as sodium pyrophosphate. Examples of the organic peroxide include t-butylperoxy isopropyl carbonate, paramenthane hydroperoxide, cumene hydroperoxide, dicumyl peroxide, t-butyl hydroperoxide, di-t-butyl peroxide, and t-hexyl peroxide. Examples of the inorganic peroxide include hydrogen peroxide, potassium persulfate, and ammonium persulfate.

In the step 2, a chain transfer agent is used in an amount of 0.01 parts by weight to 5.00 parts by weight with respect to 100 parts by weight of the monomer mixture for graft part formation. The above feature makes it possible to obtain a water-based coating containing the polymer (B) in an amount of, for example, not less than 5.0% by weight in 100% by weight of the total of the graft copolymer (A) and the polymer (B). This allows the present production method to have an advantage of making it possible to provide a water-based coating which has excellent film formability.

The chain transfer agent is not particularly limited. Examples of a known chain transfer agent that can be used as the chain transfer agent include t-dodecylmercaptan, n-dodecylmercaptan, normal-octylmercaptan, and 2-ethylhexylthioglycolate.

The chain transfer agent is used in an amount of preferably 0.01 parts by weight to 5.00 parts by weight, more preferably 0.01 parts by weight to 3.00 parts by weight, even more preferably 0.01 parts by weight to 1.00 part by weight, and particularly preferably 0.10 parts by weight to 1.00 part by weight, with respect to 100 parts by weight of the monomer mixture for graft part formation. The above feature is advantageous in that it is possible to provide a water-based coating which has more excellent film formability.

Furthermore, in the present production method, the monomer mixture for polyorganosiloxane formation is contained in an amount of 55% by weight to 90% by weight in 100% by weight of a total of the monomer mixture for polyorganosiloxane formation and the monomer mixture for graft part formation. The above feature is advantageous in that it is possible to obtain a water-based coating which makes it possible to provide a highly water-repellent coating film. In the present production method, a total amount of the monomer mixture for polyorganosiloxane formation may be 55% by weight to 95% by weight, more preferably 60% by weight to 90% by weight, even more preferably 65% by weight to 85% by weight, and particularly preferably 70% by weight to 85% by weight, in 100% by weight of a total amount of the monomer mixture for polyorganosiloxane formation and the monomer mixture for graft part formation. The above feature is advantageous in that it is possible to provide a water-based coating which has more excellent film formability.

Aspects (including a preferable aspect) of the graft rate of the graft part obtained by polymerizing the monomer mixture for graft part formation are identical to those described in the foregoing (Graft rate of graft part) section, and thus the descriptions in that section apply and are not repeated here.

Aspects (including a preferable aspect) of the glass transition temperature of the graft part obtained by polymerizing the monomer mixture for graft part formation are identical to those described in the foregoing (Glass transition temperature of graft part) section, and thus the descriptions in that section apply and are not repeated here.

As described earlier, in the step 2, a non-grafted polymer is obtained together with the graft part. The aqueous latex containing the graft copolymer (A) and the polymer (B) can be obtained by not removing the non-grafted polymer from the aqueous latex obtained in the step 2. Ratios of the graft part and the non-grafted polymer that are obtained in the step 2 can be adjusted as appropriate by, for example, (a) the amount of the monomer M in the monomer mixture for polyorganosiloxane formation in the step 1 and (b) the amount of the chain transfer agent used in the step 2. Note that a separately prepared polymer (B) may be further added to the aqueous latex of the graft copolymer (A) or to the aqueous latex containing the graft copolymer (A) and the non-grafted polymer.

In the step 2, the monomer mixture for graft part formation preferably contains a reactive emulsifier. The reactive emulsifier is identical to that described in the foregoing (Structural unit derived from reactive emulsifier) section, and thus the descriptions in that section apply and are not repeated here. For example, the reactive emulsifier is used in the step 2 in an amount of preferably 0.1% by weight to 20.0% by weight, more preferably 0.1% by weight to 15.0% by weight, more preferably 1.0% by weight to 15.0% by weight, more preferably 1.0% by weight to 10.0% by weight, even more preferably 1.0% by weight to 8.0% by weight, still more preferably 1.0% by weight to 5.0% by weight, and particularly preferably 1.0% by weight to 4.0% by weight, in 100% by weight of the monomer mixture for graft part formation. The above feature is advantageous in that a scale is much less or not produced during production of the water-based coating.

In the step 2, the monomer mixture for graft part formation preferably contains the monomer M containing (a) at least one hydrolyzable silyl group in a molecule and (b) at least one ethylenically unsaturated group and/or at least one mercapto group. The monomer M is identical to that described in the foregoing (Structural unit U) and (2-1-3. Graft part) sections, and thus the descriptions in those sections apply and are not repeated here. For example, the monomer M is used in the step 2 in an amount of preferably 0.1% by weight to 20.0% by weight, more preferably 0.1% by weight to 15.0% by weight, more preferably 1.0% by weight to 15.0% by weight, even more preferably 1.0% by weight to 10.0% by weight, and particularly preferably 1.0% by weight to 8.0% by weight, in 100% by weight of the monomer mixture for graft part formation. The above feature is advantageous in that a blister is much less or not produced when a coating film obtained from the water-based coating is immersed in water.

In addition to the above-listed components, an emulsifier and a surfactant can be further used to polymerize each monomer mixture in production of a water-based coating. Types and used amounts of the emulsifier and the surfactant are in known ranges.

In production of the water-based coating, conditions of polymerization of each monomer mixture, such as a polymerization temperature, a pressure, and deoxygenation can be conditions in known ranges.

The aqueous latex obtained by the above-described production method and containing the graft copolymer (A) and the polymer (B) may be used, as the water-based coating, as it is or by being diluted as necessary in water (e.g., deionized water). The water-based coating may be obtained by further adding an antifouling agent and/or other optional component(s) to the aqueous latex obtained by the above-described production method and containing the graft copolymer (A) and the polymer (B). In other words, the present production method may further include a step of adding the antifouling agent. The antifouling agent and the other optional component(s) are identical to those described in the foregoing (2-3. Antifouling agent) and (2-5. Other optional component(s)) sections, and thus the descriptions in those sections apply and are not repeated here.

[4. Method for using water-based coating (method for producing water-based coating film)]

A method for using the present water-based coating can also be referred to as a method for forming a coating film (e.g., an antifouling coating film) in which a water-based coating is used. The method for using the present water-based coating includes a step of applying a water-based coating to an underwater structure. Specifically, a method for using a water-based coating in accordance with an embodiment of the present invention includes a step of applying, to an underwater structure, a water-based coating in accordance with an embodiment of the present invention, the water-based coating being described in the foregoing [2. Water-based coating] section, or a water-based coating obtained by a method for producing a water-based coating in accordance with an embodiment of the present invention, the method being described in the foregoing [3. Method for producing water-based coating] section. A method for using a water-based coating can also be referred to as a method for producing a water-based coating film. Specifically, a method for producing a water-based coating film in accordance with an embodiment of the present invention includes a step of applying, to an underwater structure, a water-based coating in accordance with an embodiment of the present invention, the water-based coating being described in the foregoing [2. Water-based coating] section, or a water-based coating obtained by a method for producing a water-based coating in accordance with an embodiment of the present invention, the method being described in the foregoing [3. Method for producing water-based coating] section. The above feature makes it possible to form a coating film that has water repellency on a surface or an inner surface of an underwater structure. A coating film made of the present water-based coating has an antifouling property against underwater life. Thus, a coating film that has an antifouling property on a surface or an inner surface of an underwater structure can be formed by carrying out a step of applying a water-based coating to the underwater structure. Furthermore, the present water-based coating has excellent film formability. Thus, a coating film that has water repellency (and an antifouling property) on a surface or an inner surface of an underwater structure can be easily formed by applying a water-based coating to the underwater structure.

A method for applying the water-based coating in the step of applying the water-based coating is not particularly limited, and can be a known method. As the method for applying the water-based coating, it is possible to employ any of, for example, a flow casting method, an immersion method, a spray method, brush and brush application, a roller, a dip coater, electrostatic coating, and electrodeposition coating.

An application robot may be used in the step of applying the water-based coating. The application robot can be used to extrude the water-based coating onto the underwater structure in the form of beads, a monofilament, or a swirl, and apply the extruded water-based coating to the underwater structure. Alternatively, a jet spray method or a streaming method can be used to apply the water-based coating to the underwater structure.

The water-based coating applied to the underwater structure may be dried. As described above, by applying the water-based coating to the underwater structure and optionally drying the water-based coating, it is possible to form a coating film that has water repellency (and an antifouling property) on the underwater structure.

A method for producing a water-based coating film in accordance with an embodiment of the present invention may be configured as below.

A method for producing a water-based coating film, including a step of applying a water-based coating to an underwater structure,

the water-based coating film
containing a graft copolymer (A) and a polymer (B),
the graft copolymer (A) containing a polyorganosiloxane and a graft part grafted to the polyorganosiloxane,
the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked,
the polymer (B) containing a structural unit derived from at least one type of monomer selected from the group consisting of an aromatic vinyl monomer, a vinyl cyanide monomer, and a (meth)acrylate monomer,
the polyorganosiloxane being contained in an amount of 55% by weight to 90% by weight in 100% by weight of a total of the graft copolymer (A) and the polymer (B), and
the polymer (B) being contained in an amount of not less than 5.0% by weight in 100% by weight of the total of the graft copolymer (A) and the polymer (B).

A method for producing a water-based coating film in accordance with an embodiment of the present invention may be configured as below.

A method for producing a water-based coating film, including a step of applying a water-based coating to an underwater structure,

the water-based coating film

containing a graft copolymer (A) and a polymer (B),

the graft copolymer (A) containing a polyorganosiloxane and a graft part grafted to the polyorganosiloxane,

the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked,

the polymer (B) containing a structural unit derived from at least one type of monomer selected from the group consisting of an aromatic vinyl monomer, a vinyl cyanide monomer, and a (meth)acrylate monomer,

the polyorganosiloxane being contained in an amount of 55% by weight to 90% by weight in 100% by weight of a total of the graft copolymer (A) and the polymer (B), and

a complex of the graft copolymer (A) and the polymer (B) having a weight-average molecular weight of not more than 150,000.

[5. Coating film]

A coating film formed by the method described in the foregoing [4. Method for using water-based coating (method for producing water-based coating film)] section is also an embodiment of the present invention. That is, (a) a coating film made of the present water-based coating described in the foregoing [2. Water-based coating] section, or (b) a coating film made of a water-based coating produced by the present production method described in the foregoing [3. Method for producing water-based coating] section is also an embodiment of the present invention. Hereinafter, "a coating film in accordance with an embodiment of the present invention" may be referred to as "the present coating film".

The present coating film has an advantage of being highly water repellent. This allows the present coating film to also have an advantage of having an excellent antifouling property against underwater life.

In a case where the present coating film (e.g., a coating film made of the present water-based coating and having a thickness of 100 pm) has a water repellency of more than 90, such a coating film can be said to be highly water repellent. The present coating film (e.g., a coating film made of the present water-based coating and having a thickness of 100 pm) has a water repellency of preferably not less than 92, more preferably not less than 94, more preferably not less than 96, even more preferably not less than 98, and particularly preferably not less than 100. According to the above feature, the coating film has an advantage of having a more excellent antifouling property against underwater life. A method for measuring the water repellency of the coating film will be described in detail in Examples described later.

Furthermore, the present coating film (e.g., a coating film made of the present water-based coating and having a thickness of 100 pm) has a coating film hardness of preferably less than 70, more preferably not more than 60, more preferably not more than 50, more preferably not more than 40, even more preferably not more than 35, and particularly preferably not more than 30. According to the above feature, the coating film has an advantage of having a more excellent antifouling property against underwater life. A method for measuring the coating film hardness of the coating film will be described in detail in Examples described later.

As described earlier, the polyorganosiloxane and graft part of the graft copolymer (A) contained in the present water-based coating are preferably non-substantially non-crosslinked. A crosslinking density of the graft copolymer (A) is correlated with elasticity of the graft copolymer (A), and consequently can be correlated with a dynamic storage modulus of a coating film obtained from the water-based coating (e.g., a coating film made of the water-based coating and having a thickness of 100 $\mu$m). In other words, the crosslinking density calculated from the dynamic storage modulus of the coating film can reflect a crosslinking density of the polyorganosiloxane and the graft part of the graft copolymer (A) contained in the water-based coating. A crosslinking density calculated from a dynamic storage modulus of the present coating film (e.g., a coating film made of the present water-based coating and having a thickness of 100 $\mu$m) is preferably not more than $1.0\times 10^{-4}$ mol/cm$^3$, more preferably not more than $1.0\times 10^{-5}$ mol/cm$^3$, more preferably not more than $1.0\times10^{-6}$ mol/cm$^3$, more preferably $1.0\times10^{-7}$ mol/cm$^3$, more preferably not more than $1.0\times10^{-8}$ mol/cm$^3$, even more preferably not more than $1.0\times10^{-9}$ mol/cm$^3$, and particularly preferably not more than $1.0\times10^{-10}$ mol/cm$^3$. In a case where the crosslinking density calculated from the dynamic storage modulus of the coating film is not more than $1.0\times 10^{-4}$ mol/cm$^3$, the polyorganosiloxane and the graft part of the graft copolymer (A) contained in the water-based coating can be said to be highly likely to be non-crosslinked. A method for measuring the storage modulus and the crosslinking density of the coating film will be described in detail in Examples described later.

[6. Use]

The present water-based coating can be suitably used as an antifouling coating for preventing fouling of surfaces or inner surfaces of various underwater structures. Examples of the underwater structures include: watercrafts; materials for aquaculture and fishing (such as ropes, fishing nets, fishing equipment, bobbers, buoys, and tetrapods); oil fences; supply and drainage ports at thermal or nuclear power plants; pipes for, for example, cooling conduits and seawater utilization equipment; undersea tunnels; submarine bases; megafloats; harbor facilities; various ocean civil engineering works at, for example, canals and waterways; industrial water-related facilities; bridges; and floating marks.

An embodiment of the present invention may be configured as follows.

<1> A water-based coating containing a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and the polymer (B) being contained in an amount of not less than 5.0% by weight in 100% by weight of the total of the graft copolymer (A) and the polymer (B).

<2> The water-based coating described in <1>, wherein a complex of the graft copolymer (A) and the polymer (B) has a weight-average molecular weight of not more than 150,000.

<3> A water-based coating containing a graft copolymer (A) and a polymer (B), the graft copolymer (A) containing a polyorganosiloxane and a graft part grafted to the polyorganosiloxane, the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked, the polymer (B) containing a structural unit derived from at least one type of monomer selected from the group consisting of an aromatic vinyl monomer, a vinyl cyanide monomer, and a (meth)acrylate monomer, the polyorganosiloxane being contained in an amount of 55% by weight to 90% by weight in 100% by weight of a total of the graft copolymer (A) and the polymer (B), and a complex of the graft copolymer (A) and the polymer (B) having a weight-average molecular weight of not more than 150,000.

<4> The water-based coating described in <3>, wherein the polymer (B) is contained in an amount of not less than 5.0% by weight in 100% by weight of the total of the graft copolymer (A) and the polymer (B).

<5> The water-based coating described in any one of <1> to <4>, wherein the polyorganosiloxane contains the structural unit U in an amount of 0.001% by weight to 10.0% by weight in 100% by weight of the polyorganosiloxane.

<6> The water-based coating described in any one of <1> to <5>, wherein the graft part has a glass transition temperature of not higher than 80°C.

<7> The water-based coating described in any one of <1> to <6>, wherein the graft part further contains a structural unit derived from a reactive emulsifier.

<8> The water-based coating described in <7>, wherein the graft part contains the structural unit derived from the reactive emulsifier in an amount of 0.1% by weight to 20.0% by weight in 100% by weight of all structural units of the graft part.

<9> The water-based coating described in any one of <1> to <8>, wherein the graft part further contains a structural unit derived from a monomer M containing (a) at least one hydrolyzable silyl group in a molecule and (b) at least one ethylenically unsaturated group and/or at least one mercapto group.

<10> The water-based coating described in <9>, wherein the graft part contains the structural unit derived from the monomer M in an amount of 0.1% by weight to 20.0% by weight in 100% by weight of all structural units of the graft part.

<11> The water-based coating described in any one of <1> to <10>, further containing an antifouling agent.

<12> The water-based coating described in any one of <1> to <11>, wherein the polyorganosiloxane has a volume-average particle size of 0.03 μm to 50.00 pm.

<13> The water-based coating described in any one of <1> to <12>, wherein the graft part has a graft rate of not less than 75.0%.

<14> The water-based coating described in any one of <1> to <13>, wherein the graft part has a glass transition temperature of not lower than -25°C.

<15> A method for producing a water-based coating film, including a step of applying, to an underwater structure, a water-based coating described in any one of <1> to <14>.

<16> A method for producing a water-based coating, including: a step 1 of obtaining a polyorganosiloxane by polymerizing a monomer mixture for polyorganosiloxane formation, the monomer mixture containing (a) an organosiloxane and (b) a monomer M containing (b-1) at least one hydrolyzable silyl group in a molecule and (b-2) at least one ethylenically unsaturated group and/or at least one mercapto group; and a step 2 of polymerizing, in the presence of the polyorganosiloxane obtained in the step 1, a monomer mixture for graft part formation, wherein the monomer mixture for polyorganosiloxane formation is contained in an amount of 55% by weight to 90% by weight in 100% by weight of a total of the monomer mixture for polyorganosiloxane formation and the monomer mixture for graft part formation, in the step 1, a polyfunctional alkoxysilane compound and a polyfunctional monomer are used in a total amount of not more than 0.50% by weight in 100% by weight of the monomer mixture for polyorganosiloxane formation, in the step 2, the monomer mixture for graft part formation contains at least one type of monomer selected from the group consisting of an aromatic vinyl monomer, a vinyl cyanide monomer, and a (meth)acrylate monomer, and in the step 2, a chain transfer agent is used in an amount of 0.01 parts by weight to 5.00 parts by weight with respect to 100 parts by weight of the monomer mixture for graft part formation.

< 17> The water-based coating described in <16>, wherein in the step 1, the monomer M is used in an amount of 0.001% by weight to 10.0% by weight in 100% by weight of the monomer mixture for polyorganosiloxane formation.

<18> The water-based coating described in <16> or <17>, wherein a graft part obtained by polymerizing the monomer mixture for graft part formation has a glass transition temperature of not higher than 80°C.

<19> The water-based coating described in any one of <16> to <18>, wherein in the step 2, the monomer mixture for graft part formation contains a reactive emulsifier.

<20> The water-based coating described in <19>, wherein in the step 2, the reactive emulsifier is used in an amount of 0.1% by weight to 20.0% by weight in 100% by weight of the monomer mixture for graft part formation.

<21> The water-based coating described in any one of <16> to <20>, wherein in the step 2, the monomer mixture for graft part formation further contains a monomer M containing (a) at least one hydrolyzable silyl group in a molecule and (b) at least one ethylenically unsaturated group and/or at least one mercapto group.

<22> The water-based coating described in <21>, wherein in the step 2, the monomer M is used in an amount of 0.1% by weight to 20.0% by weight in 100% by weight of the monomer mixture for graft part formation.

<23> The water-based coating described in any one of <16> to <22>, further including a step of adding an antifouling agent.

<24> The water-based coating described in any one of <16> to <23>, wherein the polyorganosiloxane has a volume-average particle size of 0.03 pm to 50.00 pm.

<25> The water-based coating described in any one of <16> to <24>, wherein a graft part obtained by polymerizing the monomer mixture for graft part formation has a graft rate of not less than 75.0%.

<26> The water-based coating described in any one of <16> to <25>, wherein a graft part obtained by polymerizing the monomer mixture for graft part formation has a glass transition temperature of not lower than -25°C.

Examples

The following description will discuss an embodiment of the present invention in more detail with reference to Examples and Comparative Examples. Note, however, that the present invention is not limited to these examples. An embodiment of the present invention can be altered and carried out as appropriate within the scope of the gist disclosed herein. The present invention also includes, in its technical scope, embodiments achieved by altering the embodiment. Note that in the following Examples and Comparative Examples, "parts" means "parts by weight", and "%" means "% by weight".

<Evaluation method>

First, the following description will discuss a method for evaluating a graft copolymer, a polymer (B), and a water-based coating which were produced in Examples and Comparative Examples.

(Measurement of volume-average particle size)

A volume-average particle size (Mv) of a polyorganosiloxane or the graft copolymer dispersed in an aqueous latex was measured with use of Nanotrac WaveII-EX150 (available from MicrotracBEL Corp.). A test specimen used for measurement was prepared by diluting the aqueous latex in deionized water. The measurement was carried out such that a refractive index of water and a refractive index of the polyorganosiloxane or the graft copolymer obtained in each of Production Examples were input, a measurement time was set at 120 seconds, and a test specimen concentration was adjusted so that a load index would be in a range of 1 to 10.

(Method for calculating glass transition temperature of graft part)

Tg of a graft part was calculated with use of a Tg value of a homopolymer of the following monomers in accordance with the foregoing FOX equation (Mathematical expression 1).
methyl methacrylate (MMA) 105°C
butyl methacrylate (BMA) 20°C
n-butyl acrylate (BA) -54°C

(Method for measuring graft rate and polymer (polymer (B)) content (%))

A graft rate (%) was calculated by the following method. (1) An aqueous latex containing a graft copolymer was obtained. (2) Subsequently, the aqueous latex in an amount equivalent to 2 g of a solid content in the aqueous latex and 50 mL of methylethylketone (MEK) were mixed to prepare an MEK solution. (3) Then, the MEK solution thus obtained was separated into a component soluble in MEK (MEK-soluble part) and a component insoluble in MEK (MEK-insoluble part) by, for example, centrifugation. Note here that CP60E (available from Hitachi Koki Co., Ltd.) was used as a centrifugal separator, and centrifugation was carried out under the following condition: at a rotational speed of 30,000 rpm for 1 hour. (4) MEK was added to the MEK-soluble part thus obtained, and a resulting mixture was subjected to centrifugation again under a condition identical to the above condition to separate the mixture into an MEK-soluble part and an MEK-insoluble part. An operation identical to the above operation was carried out once more. (5) Next, 20 ml of the MEK-soluble part thus obtained was mixed with 200 ml of methanol to obtain a mixture, an aqueous calcium chloride solution obtained by dissolving 0.01 g of calcium chloride in water was added to the mixture, and the mixture was stirred for 1 hour. (6) Then, a resulting mixture was separated into a methanol-soluble part and a methanol-insoluble part. (7) Subsequently, a weight of the MEK-insoluble part and a weight of the methanol-insoluble part were measured. (8) The graft rate was calculated with use of the following equation:

Graft rate (%) = 100 - [(weight of methanol-insoluble part) / {(weight of methanol-insoluble part) + (weight of MEK-insoluble part)}] / (total amount of monomer mixture for graft part formation used to prepare graft part) $\times$ 10,000

Note here that in Examples and Comparative Examples, prior to calculation of the graft rate (%), a weight of a graft copolymer (A) (weight of the MEK-insoluble part) and a weight of a non-grafted polymer (weight of the methanol-insoluble part) were recalculated so that a total of the weight of the graft copolymer (A) (weight of the MEK-insoluble part) and the weight of the non-grafted polymer (weight of the methanol-insoluble part), excluding a weight of a soluble part (i.e., a weight of the methanol-soluble part) would be 100%. An obtained value was used to calculate the graft rate.

In Examples and Comparative Examples, aqueous latexes (L-1) to (L-11) obtained in Production Examples 1 to 11 described later and aqueous latexes (CL-1) and (CL-2) obtained in Comparative Production Examples 1 and 2 were used as the "aqueous latex containing a graft copolymer".

Furthermore, in each of Examples and Comparative Examples, a graft copolymer was prepared, and then a water-based coating was obtained without removing, from a resulting aqueous latex, a non-grafted polymer that could have been formed during preparation of a graft part. Thus, the weight of the non-grafted polymer, i.e., the weight of the methanol-insoluble part, is a weight of the polymer (B) contained in the water-based coating. Therefore, an amount (%) of the polymer (B) contained in 100% by weight of the total of the graft part and the polymer (B) is a value obtained by subtracting the graft rate (%) from 100.

(Method for measuring weight-average molecular weight of complex of graft copolymer and polymer (B))

A weight-average molecular weight of a complex of the graft copolymer and the polymer (B) was measured by the following method. (1) An aqueous latex containing the graft copolymer and the polymer (B) was obtained. (2) An aqueous latex in an amount equivalent to 20 mg of a solid content in the aqueous latex and 10 mL of tetrahydrofuran were mixed to prepare a liquid mixture. (3) The liquid mixture was filtered with a PTFE filter (0.2 $\mu$m). (4) A filtrate obtained in (3) above was subjected to HLC-82201 (available from Tosoh Corporation), and a weight-average molecular weight was measured.

Note here that in Examples and Comparative Examples, the aqueous latexes (L-1) to (L-11) obtained in Production Examples 1 to 11 described later and the aqueous latexes (CL-1) and (CL-2) obtained in Comparative Production Examples 1 and 2 were used as the "aqueous latex containing the graft copolymer and the polymer (B)".

As described earlier, in each of Examples and Comparative Examples, a graft copolymer was prepared, and then a non-grafted polymer that could have been formed during preparation of a graft part was not removed from a resulting aqueous latex. Thus, the aqueous latexes (L-1) to (L-11) each can be said to be an aqueous latex of a complex of the graft copolymer (A) and the polymer (B), and the aqueous latexes (CL-1) and (CL-2) each can be said to be an aqueous latex of a complex of the graft copolymer and the polymer (B).

(Method for evaluating film formability of water-based coating)

Film formability of the water-based coating was evaluated by the following method. (1) Each of water-based coatings was applied to an aluminum plate with use of an applicator so as to achieve a post-drying film thickness of 100 $\mu$m. (2) A resulting aluminum plate was allowed to stand still overnight at 25°C, and a coating film of a water-based coating was produced. (3) A coating surface state of the resulting aluminum plate was visually checked, and film formability was evaluated by the following criteria.

"G" (Good): No crack is observed.
"P" (Poor): A crack is observed.

(Method for measuring and evaluating amount of scale produced during production of water-based coating)

An amount of a scale produced during production of the water-based coating was evaluated by the following method. (1) Each of the water-based coatings was filtrated with a 150-mesh metal gauze. (2) A substance (scale) left on the metal gauze was dried, and then a weight of the scale was measured. (3) The weight of the scale was divided by an amount of a solid content in the aqueous latex of the complex of the graft copolymer (A) and the polymer (B) and a total weight of materials added to produce a water-based coating. Then, a value thus obtained was multiplied by 100, and an amount (%) of a scale produced was calculated. (4) The amount of the scale produced was evaluated by the following criteria.

"G" (Good): The amount of the scale produced is less than 0.3%.
"P" (Poor): The amount of the scale produced is not less than 0.3%.

(Method for measuring and evaluating amount of blister produced during immersion of coating film of water-based coating in water)

An amount of a blister produced during immersion of the coating film of the water-based coating in water was evaluated by the following method. (1) An epoxy-based heavy-duty anticorrosion coating was applied to a glass plate. (2) Each of the water-based coatings was further applied to a resulting glass plate with use of an applicator so as to achieve a post-drying thickness of 100 $\mu$m. (3) The resulting glass plate was allowed to stand still overnight at 25°C, and a coating film of the epoxy-based heavy duty coating and a water-based coating was produced. (4) The resulting glass plate was immersed in water and allowed to stand still for one week. (5) After the glass plate was allowed to stand still, a coating surface state of the glass plate was visually checked, and the amount of a blister produced was evaluated by the following criteria.

"G" (Good): No blister is observed on a coating surface.
"A" (Acceptable): A blister is observed on some of the coating surface.
"NG" (No good): A blister is observed all over the coating surface.

(Method for measuring water repellency of coating film of water-based coating)

Water repellency of the coating film of the water-based coating was evaluated by the following method. (1) An epoxy-based heavy-duty anticorrosion coating was applied to a glass plate. (2) Each of the water-based coatings was further applied to a resulting glass plate with use of an applicator so as to achieve a post-drying thickness of 100 $\mu$m. (3) The resulting glass plate was allowed to stand still overnight at 25°C, and a coating film of the epoxy-based heavy duty coating and a water-based coating was produced. (4) The resulting glass plate was immersed in water and allowed to stand still for one week. (5) After the glass plate was allowed to stand still, a contact angle meter (DropMaster, available from Kyowa Interface Science Co., Ltd.) was used to measure water repellency of the coating film of the glass plate by a sessile drop method based on JIS R 3257. In Examples, it is determined that a resulting coating film whose water repellency as measured by the above-described method is more than 90 is highly water repellent.

(Method for measuring coating film hardness of coating film of water-based coating)

Coating film hardness of the coating film of the water-based coating was evaluated by the following method. (1) An epoxy-based heavy-duty anticorrosion coating was applied to a glass plate. (2) Each of the water-based coatings was further applied to a resulting glass plate with use of an applicator so as to achieve a post-drying thickness of 100 $\mu$m. (3) The resulting glass plate was allowed to stand still overnight at 25°C, and a coating film of the epoxy-based heavy duty coating and a water-based coating was produced. (4) The resulting glass plate was immersed in water and allowed to stand still for one week. (5) After the glass plate was allowed to stand still, a pendulum-type hardness tester (available from ERICHSEN GmbH 8s Co. KG) was used to measure a coating film hardness of the coating film of the glass plate.

(Production of aqueous latex containing graft copolymer and polymer (B))

(Production Example 1)

(Step 1)

251 parts by weight of deionized water, 0.5 parts by weight of SDS, and a monomer mixture for polyorganosiloxane formation (mixture consisting of 100 parts by weight of octamethylcyclotetrasiloxane and 2 parts by weight of $\gamma$-acryloyloxypropyldimethoxymethylsilane as a monomer M) were mixed to obtain a liquid mixture. The obtained liquid mixture was stirred with a homomixer at 10,000 rpm for 5 minutes to prepare an emulsion. A whole quantity of the emulsion thus obtained was introduced into a five-neck glass vessel at a time. The glass vessel used here had a thermometer, a stirrer, a reflux condenser, a nitrogen inlet, and an inlet for a monomer and an emulsifier. While the materials thus introduced were being stirred, (i) a 10% aqueous dodecylbenzenesulfonic acid (DSA) solution in an amount equivalent to 1 part by weight of a solid content in the aqueous solution was added to the glass vessel, (ii) subsequently, a temperature inside the glass vessel was raised to 80°C over approximately 40 minutes, and (iii) then a mixture in the glass vessel was allowed to react at 80°C for 6 hours. Thereafter, the temperature inside the glass vessel was lowered to 25°C, and a reaction solution in the glass vessel was left to stand for 20 hours from when the temperature inside the glass vessel reached 25°C. Then, polymerization was ended by using sodium hydroxide to adjust pH of the reaction solution to 6.8. An aqueous latex (R-1) containing a polyorganosiloxane was obtained through the above operations. A polymerization conversion rate of a monomer component was 97%. The polyorganosiloxane contained in the obtained aqueous latex (R-1) had a volume-average particle size of 280 nm.

(Step 2)

Subsequently, 275.5 parts by weight of the aqueous latex (R-1) of the polyorganosiloxane (including 70 parts by weight of the polyorganosiloxane) and 121 parts by weight of deionized water were introduced into a glass reaction vessel. The glass reaction vessel had a thermometer, a stirrer, a reflux condenser, a nitrogen inlet, and a monomer adding device. While gas in the glass reaction vessel was being replaced with nitrogen, the materials thus introduced were stirred at 60°C. Next, 0.004 parts by weight of EDTA, 0.001 parts by weight of ferrous sulfate heptahydrate, and 0.13 parts by weight of SFS were added to the glass reaction vessel, and a resulting mixture was stirred for 10 minutes. Then, a mixture of a monomer mixture for graft part formation (consisting only of 30 parts by weight of BMA), 0.24 parts by weight of t-dodecylmercaptan as a chain transfer agent, and 0.085 parts by weight of BHP was continuously added to the glass reaction vessel over 120 minutes. Thereafter, 0.013 parts by weight of BHP was added to the glass reaction vessel, and stirring of a resulting mixture in the glass reaction vessel was continued for another hour, so that polymerization was finished. An aqueous latex (L-1) containing the graft copolymer (A) and the polymer (B) was obtained through the above operations. A polymerization conversion rate of a monomer component was not less than 97%. The graft copolymer (A) contained in the obtained aqueous latex (L-1) had a volume-average particle size of 293 nm.

(Production Example 2)

An aqueous latex (L-2) containing the graft copolymer (A) and the polymer (B) was obtained by a method identical to the method in Production Example 1, except that a mixture consisting of 29 parts by weight of BMA and 1 part by weight of an ether sulfate-type anionic surfactant (having an allyloxy group) (Adeka Reasoap SR1025, available from ADEKA CORPORATION) as a reactive emulsifier was used as a monomer mixture for graft part formation. In Production Example 2, the graft copolymer (A) had a volume-average particle size of 294 nm.

(Production Example 3)

An aqueous latex (L-3) containing the graft copolymer (A) and the polymer (B) was obtained by a method identical to the method in Production Example 2, except that (a) a used amount of the aqueous latex (R-1) was changed to 314.9 parts by weight (including 80 parts by weight of the polyorganosiloxane), (b) a used amount of the BMA in the monomer mixture for graft part formation was changed to 19 parts by weight, and (c) a used amount of the t-dodecylmercaptan serving as the chain transfer agent was changed to 0.16 parts by weight. In Production Example 3, the graft copolymer (A) had a volume-average particle size of 294 nm.

(Production Example 4)

An aqueous latex (L-4) containing the graft copolymer (A) and the polymer (B) was obtained by a method identical to the method in Production Example 2, except that (a) the used amount of the aqueous latex (R-1) was changed to 334.5 parts by weight (including 85 parts by weight of the polyorganosiloxane), (b) the used amount of the BMA in the monomer mixture for graft part formation was changed to 14 parts by weight, and (c) the used amount of the t-dodecylmercaptan serving as the chain transfer agent was changed to 0.12 parts by weight. In Production Example 4, the graft copolymer (A) had a volume-average particle size of 294 nm.

(Production Example 5)

An aqueous latex (L-5) containing the graft copolymer (A) and the polymer (B) was obtained by a method identical to the method in Production Example 1, except that a mixing part consisting of 28.7 parts by weight of BMA 1 part by weight of an ether sulfate-type anionic surfactant (having an allyloxy group) (Adeka Reasoap SR1025, available from ADEKA CORPORATION) as a reactive emulsifier, and 0.3 parts by weight of 3-methacryloxypropylmethyldimethoxysilane as the monomer M was used as a monomer mixture for graft part formation. In Production Example 5, the graft copolymer (A) had a volume-average particle size of 292 nm.

(Production Example 6)

An aqueous latex (L-6) containing the graft copolymer (A) and the polymer (B) was obtained by a method identical to the method in Production Example 5, except that the used amount of the BMA in the monomer mixture for graft part formation was changed to 28.4 parts by weight, and a used amount of the 3-methacryloxypropylmethyldimethoxysilane serving as the monomer M was changed to 0.6 parts by weight. In Production Example 6, the graft copolymer (A) had a volume-average particle size of 290 nm.

(Production Example 7)

An aqueous latex (L-7) containing the graft copolymer (A) and the polymer (B) was obtained by a method identical to the method in Production Example 5, except that the used amount of the BMA in the monomer mixture for graft part formation was changed to 27.5 parts by weight, and the used amount of the 3-methacryloxypropylmethyldimethoxysilane serving as the monomer M was changed to 1.5 parts by weight. In Production Example 7, the graft copolymer (A) had a volume-average particle size of 290 nm.

(Production Example 8)

An aqueous latex (L-8) containing the graft copolymer (A) and the polymer (B) was obtained by a method identical to the method in Production Example 5, except that the used amount of the BMA in the monomer mixture for graft part formation was changed to 26 parts by weight, and the used amount of the 3-methacryloxypropylmethyldimethoxysilane serving as the monomer M was changed to 3.0 parts by weight. In Production Example 8, the graft copolymer (A) had a volume-average particle size of 291 nm.

(Production Example 9)

An aqueous latex (L-9) containing the graft copolymer (A) and the polymer (B) was obtained by a method identical to the method in Production Example 7, except that 27.5 parts by weight of MMA was used instead of 27.5 parts by weight of the BMA in the monomer mixture for graft part formation. In Production Example 9, the graft copolymer (A) had a volume-average particle size of 294 nm.

(Production Example 10)

An aqueous latex (L-10) containing the graft copolymer (A) and the polymer (B) was obtained by a method identical to the method in Production Example 7, except that a mixture of 21 parts by weight of MMA and 6.5 parts by weight of BA was used instead of 27.5 parts by weight of the BMA in the monomer mixture for graft part formation. In Production Example 10, the graft copolymer (A) had a volume-average particle size of 290 nm.

(Production Example 11)

An aqueous latex (L-11) containing the graft copolymer (A) and the polymer (B) was obtained by a method identical to the method in Production Example 7, except that a mixture of 6.5 parts by weight of MMA and 21 parts by weight of BA was used instead of 30 parts by weight of the BMA in the monomer mixture for graft part formation. In Production Example 11, the graft copolymer (A) had a volume-average particle size of 291 nm.

(Comparative Production Example 1)

An aqueous latex (CL-1) containing the graft copolymer and the polymer was obtained by a method identical to the method in Production Example 1, except that the chain transfer agent was not used in the step 2. In Comparative Production Example 1, the graft copolymer had a volume-average particle size of 295 nm.

(Comparative Production Example 2)

An aqueous latex (CL-2) containing the graft copolymer and the polymer was obtained by a method identical to the method in Production Example 2, except that (a) the used amount of the aqueous latex (R-1) was changed to 196.8 parts by weight (including 50 parts by weight of the polyorganosiloxane), (b) the used amount of the BMA in the monomer mixture for graft part formation was changed to 49 parts by weight, and (c) the chain transfer agent was not used in the step 2. In Comparative Production Example 2, the graft copolymer had a volume-average particle size of 296 nm.

In each of the aqueous latexes (L-1) to (L-11) obtained in Production Examples 1 to 11, a core part of the graft copolymer (A) was composed only of the polyorganosiloxane. Furthermore, in each of the aqueous latexes (CL-1) and (CL-2) obtained in Comparative Production Examples 1 and 2, a core part of the graft copolymer was composed only of the polyorganosiloxane. That is, a volume-average particle size of the polyorganosiloxane contained in the aqueous latex (R-1) can be said to be a volume-average particle size of the core part.

The aqueous latexes (L-1) to (L-11) obtained in Production Examples 1 to 11 and the aqueous latexes (CL-1) and (CL-2) obtained in Comparative Production Examples 1 and 2 were used to measure (a) a graft rate and a polymer content (%) and (b) a weight-average molecular weight of a complex of the graft copolymer and the polymer. The results are shown in Table 2.

Table 2 shows the composition of the graft copolymers in Production Examples 1 to 11 and Comparative Production Examples 1 and 2. In Table 2, "Polyorganosiloxane content (%)" means "the amount (%) of the polyorganosiloxane used in the step 2 with respect to 100 parts by weight of the total of the monomer mixture for polyorganosiloxane formation and the monomer mixture for graft part formation", i.e., "the amount of the polyorganosiloxane contained in 100% by weight of a total of the graft copolymer and the polymer". In Table 2, "Amount of chain transfer agent (part by weight)" means "the amount (part by weight) of the chain transfer agent used with respect to 100 parts by weight of the total of the monomer mixture for polyorganosiloxane formation and the monomer mixture for graft part formation", "Amount of reactive emulsifier amount (part by weight)" means "the amount (part by weight) of the reactive emulsifier used in 100 parts by weight of the total of the monomer mixture for polyorganosiloxane formation and the monomer mixture for graft part formation", "Monomer M (part by weight)" means "the amount (part by weight) of the monomer M used during preparation of the graft part in the step 2 in 100 parts by weight of the total of the monomer mixture for polyorganosiloxane formation and the monomer mixture for graft part formation to prepare the graft part", "Weight-average molecular weight" means "the weight average molecular weight of the complex of the graft copolymer and the polymer", "Amount of graft copolymer (%)" means "the amount (%) of the graft copolymer in 100% by weight of the total of the graft copolymer and the polymer", and "Amount of polymer (%)" means "the amount (%) of the polymer in 100% by weight of the total of the graft copolymer and the polymer".

(Examples 1 to 11 and Comparative Examples 1 and 2)

The aqueous latexes (L-1) to (L-11) were used to prepare the water-based coatings of Examples 1 to 11 in Blending Examples 1 and 2 shown in Table 1. The aqueous latexes (CL-1) and (CL-2) were used to prepare the water-based coatings of Comparative Examples 1 and 2 in Blending Examples 1 and 2 shown in Table 1.

The water-based coatings obtained in Examples in Blending Example 1 and Comparative Examples in Blending Example 1 were used to carry out the above-described measurements and evaluations. Furthermore, the water-based coatings obtained in Examples in Blending Example 2 and Comparative Examples in Blending Example 2 were used to evaluate film formability of the water-based coatings. The results are shown in Table 2.

[Table 1]

(Table 1)

|  |  |  | Blending Example 1 |
|---|---|---|---|
| Deionized water |  |  | 7.72 |
| Aqueous latex |  |  | 63.83 (30 parts by weight as solid content) |
| Film forming aid | CS-12 | JNC | 1.5 |
|  | DOWANOL DPnB | Dow Chemical Japan Limited | 0.3 |
| Thickener | SN-THICKENER 612NC | SAN NOPCO LIMITED | 1.2 |
| Leveling agent | BYK-333 | BYK JAPAN KK | 0.15 |
| Defoaming agent | Agitan295 | MUNZING CHEMIE | 0.3 |
| Total |  |  | 75 |

[Table 2]

(Table 2)

|  | Aqueous latex | Polyorganosiloxane content (%) | Amount of chain transfer agent (part by weight) | Amount of reactive emulsifier (part by weight) | Amount of monomer X (part by weight) | Tg of graft part (°C) | Weight-average molecular weight |
|---|---|---|---|---|---|---|---|
| Example 1 | L-1 | 70 | 0.24 | 0 | 0 | 25 | 80,564 |
| Example 2 | L-2 | 70 | 0.24 | 1 | 0 | 25 | 42,214 |
| Example 3 | L-3 | 80 | 0.16 | 1 | 0 | 25 | 49,051 |
| Example 4 | L-4 | 85 | 0.12 | 1 | 0 | 25 | 44,043 |
| Example 5 | L-5 | 70 | 0.24 | 1 | 0.3 | 25 | 41,845 |
| Example 6 | L-6 | 70 | 0.24 | 1 | 0.6 | 25 | 23,456 |
| Example 7 | L-7 | 70 | 0.24 | 1 | 1.5 | 25 | 51,867 |
| Example 8 | L-8 | 70 | 0.24 | 1 | 3.0 | 25 | 75,996 |
| Example 9 | L-9 | 70 | 0.24 | 1 | 1.5 | 100 | 48,522 |
| Example 10 | L-10 | 70 | 0.24 | 1 | 1.5 | 50 | 49,639 |
| Example 11 | L-11 | 70 | 0.24 | 1 | 1.5 | -30 | 42,356 |
| Comparative Example 1 | CL-1 | 70 | 0 | 0 | 0 | 25 | 191,565 |
| Comparative Example 2 | CL-2 | 50 | 0 | 1 | 0 | 25 | 141,284 |

(Table 2)

|  | Amount of graft copolymer (%) | Amount of polymer (%) | Film formability (Blending Example 1) | Film formability (Blending Example 2) | Water repellency | Amount of scale produced | Amount of blister produced | Coating film hardness |
|---|---|---|---|---|---|---|---|---|
| Example 1 | 82.3 | 17.7 | G | G | 101 | P | NG | 28 |

(continued)

| | Amount of graft copolymer (%) | Amount of polymer (%) | Film formability (Blending Example 1) | Film formability (Blending Example 2) | Water repellency | Amount of scale produced | Amount of blister produced | Coating film hardness |
|---|---|---|---|---|---|---|---|---|
| Example 2 | 81.7 | 18.3 | G | G | 102 | G | NG | 27 |
| Example 3 | 87.3 | 12.7 | G | G | 103 | G | NG | 29 |
| Example 4 | 94.6 | 5.4 | G | P | 105 | G | NG | 22 |
| Example 5 | 90.5 | 9.5 | G | G | 102 | G | A | 25 |
| Example 6 | 90.8 | 9.2 | G | G | 101 | G | G | 26 |
| Example 7 | 91.2 | 8.8 | G | G | 106 | G | G | 24 |
| Example 8 | 92.0 | 8.0 | G | G | 105 | G | A | 24 |
| Example 9 | 83.1 | 16.9 | G | P | 103 | P | G | 37 |
| Example 10 | 82.5 | 17.5 | G | G | 101 | G | G | 32 |
| Example 11 | 83.6 | 16.4 | G | G | 105 | G | NG | 21 |
| Comparative Example 1 | 96.2 | 3.8 | P | P | - | P | NG | - |
| Comparative Example 2 | 74.8 | 25.2 | G | G | 90 | G | NG | 29 |

Industrial Applicability

An embodiment of the present invention makes it possible to provide a water-based coating that makes it possible to provide a highly water-repellent coating film and that has excellent film formability. Furthermore, a water-based coating in accordance with an embodiment of the present invention makes it possible to provide a coating film that has an excellent antifouling property against underwater life. Thus, the water-based coating in accordance with an embodiment of the present invention and a coating film made of the water-based coating can be suitably used for underwater structures such as watercrafts, materials for aquaculture and fishing, oil fences, supply and drainage ports at thermal or nuclear power plants, pipes for, for example, cooling conduits and seawater utilization equipment, undersea tunnels, submarine bases, megafloats, harbor facilities, various ocean civil engineering works at, for example, canals and waterways, industrial water-related facilities, bridges, and floating marks.

**Claims**

1. A water-based coating comprising a graft copolymer (A) and a polymer (B),

   the graft copolymer (A) containing a polyorganosiloxane and a graft part grafted to the polyorganosiloxane,
   the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked,
   the polymer (B) containing a structural unit derived from at least one type of monomer selected from the group consisting of an aromatic vinyl monomer, a vinyl cyanide monomer, and a (meth)acrylate monomer,
   the polyorganosiloxane being contained in an amount of 55% by weight to 90% by weight in 100% by weight of a total of the graft copolymer (A) and the polymer (B), and
   the polymer (B) being contained in an amount of not less than 5.0% by weight in 100% by weight of the total of the graft copolymer (A) and the polymer (B).

2. The water-based coating as set forth in claim 1, wherein a complex of the graft copolymer (A) and the polymer (B) has a weight-average molecular weight of not more than 150,000.

3. A water-based coating comprising a graft copolymer (A) and a polymer (B),

   the graft copolymer (A) containing a polyorganosiloxane and a graft part grafted to the polyorganosiloxane,
   the polyorganosiloxane (a) containing a structural unit U derived from a monomer containing (a-1) at least one hydrolyzable silyl group in a molecule and (a-2) at least one ethylenically unsaturated group and/or at least one mercapto group, and (b) being non-crosslinked,
   the polymer (B) containing a structural unit derived from at least one type of monomer selected from the group consisting of an aromatic vinyl monomer, a vinyl cyanide monomer, and a (meth)acrylate monomer,
   the polyorganosiloxane being contained in an amount of 55% by weight to 90% by weight in 100% by weight of a total of the graft copolymer (A) and the polymer (B), and
   a complex of the graft copolymer (A) and the polymer (B) having a weight-average molecular weight of not more than 150,000.

4. The water-based coating as set forth in claim 3, wherein the polymer (B) is contained in an amount of not less than 5.0% by weight in 100% by weight of the total of the graft copolymer (A) and the polymer (B).

5. The water-based coating as set forth in any one of claims 1 to 4, wherein the polyorganosiloxane contains the structural unit U in an amount of 0.001% by weight to 10.0% by weight in 100% by weight of the polyorganosiloxane.

6. The water-based coating as set forth in any one of claims 1 to 4, wherein the graft part has a glass transition temperature of not higher than 80°C.

7. The water-based coating as set forth in any one of claims 1 to 4, wherein the graft part further contains a structural unit derived from a reactive emulsifier.

8. The water-based coating as set forth in claim 7, wherein the graft part contains the structural unit derived from the reactive emulsifier in an amount of 0.1% by weight to 20.0% by weight in 100% by weight of all structural units of the graft part.

9. The water-based coating as set forth in any one of claims 1 to 4, wherein the graft part further contains a structural unit derived from a monomer M containing (a) at least one hydrolyzable silyl group in a molecule and (b) at least one ethylenically unsaturated group and/or at least one mercapto group.

10. The water-based coating as set forth in claim 9, wherein the graft part contains the structural unit derived from the monomer M in an amount of 0.1% by weight to 20.0% by weight in 100% by weight of all structural units of the graft part.

11. The water-based coating as set forth in any one of claims 1 to 4, further comprising an antifouling agent.

12. The water-based coating as set forth in any one of claims 1 to 4, wherein the polyorganosiloxane has a volume-average particle size of 0.03 μm to 50.00 μm.

13. The water-based coating as set forth in any one of claims 1 to 4, wherein the graft part has a graft rate of not less than 75.0%.

14. A method for producing a water-based coating film, comprising applying, to an underwater structure, a water-based coating recited in any one of claims 1 to 4.

15. A method for producing a water-based coating, comprising:

   a step 1 of obtaining a polyorganosiloxane by polymerizing a monomer mixture for polyorganosiloxane formation, the monomer mixture containing (a) an organosiloxane and (b) a monomer M containing (b-1) at least one hydrolyzable silyl group in a molecule and (b-2) at least one ethylenically unsaturated group and/or at least one mercapto group; and
   a step 2 of polymerizing, in the presence of the polyorganosiloxane obtained in the step 1, a monomer mixture for graft part formation, wherein
   the monomer mixture for polyorganosiloxane formation is contained in an amount of 55% by weight to 90% by weight in 100% by weight of a total of the monomer mixture for polyorganosiloxane formation and the monomer mixture for graft part formation,

in the step 1, a polyfunctional alkoxysilane compound and a polyfunctional monomer are used in a total amount of not more than 0.50% by weight in 100% by weight of the monomer mixture for polyorganosiloxane formation, in the step 2, the monomer mixture for graft part formation contains at least one type of monomer selected from the group consisting of an aromatic vinyl monomer, a vinyl cyanide monomer, and a (meth)acrylate monomer, and in the step 2, a chain transfer agent is used in an amount of 0.01 parts by weight to 5.00 parts by weight with respect to 100 parts by weight of the monomer mixture for graft part formation.

## INTERNATIONAL SEARCH REPORT

International application No.

**PCT/JP2022/045036**

### A. CLASSIFICATION OF SUBJECT MATTER

*C08F 290/14*(2006.01)i; *C09D 5/16*(2006.01)i; *C09D 183/10*(2006.01)i; *C09D 7/65*(2018.01)i
FI:   C09D183/10; C09D5/16; C09D7/65; C08F290/14

According to International Patent Classification (IPC) or to both national classification and IPC

### B. FIELDS SEARCHED

Minimum documentation searched (classification system followed by classification symbols)

C08F290/14; C09D5/16; C09D183/10; C09D7/65; C08L83/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2017/155064 A1 (ASAHI KASEI KABUSHIKI KAISHA) 14 September 2017 (2017-09-14)<br>    claim 1, paragraphs [0012], [0062], [0066], [0071], [0127], [0141], [0148], tables 1-3, production examples 1, 13, example 3 | 1-10, 12, 15 |
| Y | claim 1, paragraphs [0012], [0053], [0060], [0062], [0066], [0071], [0127], [0141], [0148], tables 1-3, production examples 1, 13, example 3 | 7-8, 11, 13-15 |
| Y | JP 2007-191531 A (MITSUBISHI RAYON CO LTD) 02 August 2007 (2007-08-02)<br>    claims, paragraphs [0058]-[0059] | 11, 14 |
| X | JP 9-208888 A (TOSHIBA SILICONE CO LTD) 12 August 1997 (1997-08-12)<br>    claim 1, paragraphs [0042], [0060], [0065]-[0096], table 1, examples 1-3, 5 | 1-6, 9-10, 12-13 |
| Y | claim 1, paragraphs [0042]-[0043], [0045], [0060], [0065]-[0096], table 1, examples 1-3, 5 | 7-8, 11, 13-15 |
| Y | JP 7-8,11,13-15 A (MITSUBISHI RAYON CO LTD) 30 June 2011 (2011-06-30)<br>    paragraph [0047] | 15 |
| A | JP 7-286129 A (JAPAN SYNTHETIC RUBBER CO LTD) 31 October 1995 (1995-10-31)<br>    entire text | 1-15 |

☑ Further documents are listed in the continuation of Box C.       ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **14 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/045036**

### C. DOCUMENTS CONSIDERED TO BE RELEVANT

| Category* | Citation of document, with indication, where appropriate, of the relevant passages | Relevant to claim No. |
|---|---|---|
| A | JP 9-176437 A (JAPAN SYNTHETIC RUBBER CO LTD) 08 July 1997 (1997-07-08)<br>entire text | 1-15 |
| A | JP 8-81524 A (NIPPON PAINT CO LTD) 26 March 1996 (1996-03-26)<br>entire text | 1-15 |

Form PCT/ISA/210 (second sheet) (January 2015)

INTERNATIONAL SEARCH REPORT
Information on patent family members

International application No.

**PCT/JP2022/045036**

| Patent document cited in search report | | | Publication date (day/month/year) | Patent family member(s) | Publication date (day/month/year) |
|---|---|---|---|---|---|
| WO | 2017/155064 | A1 | 14 September 2017 | (Family: none) | |
| JP | 2007-191531 | A | 02 August 2007 | (Family: none) | |
| JP | 9-208888 | A | 12 August 1997 | (Family: none) | |
| JP | 2011-127002 | A | 30 June 2011 | (Family: none) | |
| JP | 7-286129 | A | 31 October 1995 | (Family: none) | |
| JP | 9-176437 | A | 08 July 1997 | (Family: none) | |
| JP | 8-81524 | A | 26 March 1996 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011046086 A
- JP 2004137374 A
- JP 9137123 A
- JP 9208642 A

- JP 7286129 A
- JP 7033836 A
- WO 2005028546 A

**Non-patent literature cited in the description**

- Polymer Handbook. Jphn Wiley 8s Sons, Inc